# EUROPEAN PATENT APPLICATION

(11) **EP 4 770 113 A1**
(43) Date of publication of application: **01.07.2026**
(21) Application number: 24932279.3
(22) Date of filing: 23.12.2024
(51) Int. Cl.: H04N 23/743

(54) **PHOTOGRAPHING PROCESSING METHOD, ELECTRONIC DEVICE, AND COMPUTER-READABLE STORAGE MEDIUM**

(30) Priority: 29.03.2024 CN 202410389142
(71) Applicant: Huawei Technologies Co., Ltd., Shenzhen, Guangdong 518129 (CN)
(72) Inventor: FU, Dianguang, Shenzhen, Guangdong 518129 (CN)
(74) Representative: Pfenning, Meinig & Partner mbB
(86) International application number: PCT/CN2024/141487
(87) International publication number: WO 2025/200634

(57) **Abstract**

Embodiments of this application disclose a photographing processing method, an electronic device, and a computer-readable storage medium. In the method, an electronic device selects a first photographing frame and delivers a first manual-exposure parameter to an image sensor in response to a first photographing operation on a photographing preview interface, where the first photographing frame includes a first image and a first manual-exposure frame, the first manual-exposure parameter indicates the image sensor to obtain a second manual-exposure frame based on the first manual-exposure parameter, and the second manual-exposure frame is cached in cache space; selects a second photographing frame in response to a second photographing operation, where the second photographing frame includes a second image and a second manual-exposure frame selected from the cache space, and the second photographing operation is performed after the first photographing operation; and generates a second photographing image based on the second photographing frame. In this way, after a photographing operation is received, a manual-exposure parameter is set and delivered for next photographing in advance, to mask time taken for the manual-exposure parameter to take effect, and increase a photographing speed.

## Description

This application claims priority to Chinese Patent Application No. 202410389142.5, filed with the China National Intellectual Property Administration on March 29, 2024 and entitled "PHOTOGRAPHING PROCESSING METHOD, ELECTRONIC DEVICE, AND COMPUTER-READABLE STORAGE MEDIUM", which is incorporated herein by reference in its entirety.

### TECHNICAL FIELD

This application relates to the field of image technologies, and in particular, to a photographing processing method, an electronic device, and a computer-readable storage medium.

### BACKGROUND

With continuous popularization of electronic devices such as mobile phones and increasingly powerful functions, an increasing quantity of users take photos by using photographing functions of electronic devices such as mobile phones.

When an electronic device, for example, a mobile phone, captures a high dynamic range (High Dynamic Range, HDR) image, a plurality of images with different exposures need to be fused each time during photographing, to increase a dynamic range of the image. Therefore, each time during photographing, in addition to a need to capture a normal-exposure image, a manual-exposure parameter further needs to be set, and at least one manual-exposure frame is captured based on the manual-exposure parameter. The manual-exposure frame has an exposure different from an exposure of the normal-exposure image, and may be used to increase a dynamic range of an image. For example, the manual-exposure frame may include a long-exposure image and a short-exposure image.

However, it takes time for the manual-exposure parameter to take effect. To be specific, there is a specific delay between time at which the manual-exposure parameter is set and time at which the manual-exposure frame is output, reducing a photographing speed.

### SUMMARY

This application provides a photographing processing method, an electronic device, and a computer-readable storage medium, to resolve a problem in the conventional technology that there is a specific delay between time at which a manual-exposure parameter is set and time at which a manual-exposure frame is output, leading to a low photographing speed.

According to a first aspect, an embodiment of this application provides a photographing processing method. In the method, an electronic device displays a photographing preview interface; in response to a first photographing operation on the photographing preview interface, selects a first photographing frame, and delivers a first manual-exposure parameter to an image sensor, where the first photographing frame includes at least one first image and at least one first manual-exposure frame, an exposure of the first manual-exposure frame is different from an exposure of the first image, the first manual-exposure parameter indicates the image sensor to perform exposure processing based on the first manual-exposure parameter to obtain a second manual-exposure frame, and the second manual-exposure frame is cached in cache space; generates a first photographing image based on the first photographing frame; in response to a second photographing operation on the photographing preview interface, selects a second photographing frame, where the second photographing frame includes at least one second image and at least one second manual-exposure frame selected from the cache space, an exposure of the second manual-exposure frame is different from an exposure of the second image, and the second photographing operation is performed after the first photographing operation; and generates a second photographing image based on the second photographing frame.

It can be learned from the foregoing technical solution that, in this embodiment of this application, after the first photographing operation is received, the first photographing frame needed for the first photographing operation is selected; and further, the first manual-exposure parameter is delivered to the image sensor in advance, to control the image sensor to output a manual-exposure frame needed for next photographing, that is, the second manual-exposure frame, and the second manual-exposure frame is stored in the cache space. In this way, when a next photographing operation (namely, the second photographing operation) is received, the second manual-exposure frame may be directly selected from the cache space, without a need to set a manual-exposure parameter for current photographing or wait for a manual-exposure parameter to take effect. This masks a period between time at which a manual-exposure parameter is set and time at which a manual-exposure frame is output, to increase a photographing speed. That is, after a photographing operation is received, a manual-exposure parameter is set and delivered for next photographing in advance, to mask time taken for the manual-exposure parameter to take effect, and increase a photographing speed.

For example, each time HDR image shooting is performed, multi-frame fusion needs to be performed on a normal-exposure image, a long-exposure image, and a short-exposure image. Exposures of the normal-exposure image, the long-exposure image, and the short-exposure image are different. A manual-exposure frame includes the long-exposure image and the short-exposure image. In this case, in addition to the normal-exposure image, the long-exposure image and the short-exposure image further need to be captured.

In the related technology, when displaying a photographing preview interface, an electronic device may pre-cache a normal-exposure image in a zero shutter lag (Zero Shutter Lag, ZSL) queue based on a ZSL technology; then deliver a long-exposure parameter and a short-exposure parameter to an image sensor when receiving a photographing operation of a user, to indicate the image sensor to output a long-exposure image and a short-exposure image based on the delivered exposure parameters; and finally performs multi-frame synthesis based on the long-exposure image, the short-exposure image, and the normal-exposure image selected from the ZSL queue, to obtain an HDR image for a current photographing operation. However, a manual-exposure parameter for current photographing is delivered after the photographing operation of the user is received, and there is a specific delay between time at which the manual-exposure parameter is set and time at which the manual-exposure parameter takes effect (to be specific, the image sensor outputs an exposure frame). Consequently, it takes a long time to obtain a multi-frame composite image for the current photographing operation, affecting a photographing speed. Particularly, in a continuous capture scenario, to be specific, a scenario in which a user continuously taps a capture button for a plurality of times within a short time, each time during photographing, the user needs to wait for a manual-exposure parameter to take effect. This severely affects a photographing speed and reduces a continuous capture speed.

However, in this embodiment of this application, when displaying the photographing preview interface, the electronic device pre-caches a normal-exposure image in a ZSL queue; and after receiving a photographing operation of a user, the electronic device not only selects a photographing frame needed for current photographing, but also delivers a manual-exposure parameter to the image sensor in advance, to indicate the image sensor to output a long-exposure image and a short-exposure image that are needed for a next photographing operation, and caches the long-exposure image and the short-exposure image in the cache space. In this way, after the next photographing operation is received, the long-exposure image and the short-exposure image that are needed for current photographing may be directly selected from the cache space, without a need to set a manual-exposure parameter for the current photographing or wait for a manual-exposure parameter to take effect. This masks a period between time at which the manual-exposure parameter is set and time at which the manual-exposure parameter takes effect, to increase a photographing speed. Particularly, in the continuous capture scenario, in this embodiment of this application, because a manual-exposure parameter is set and delivered in advance during photographing, time for the manual-exposure parameter to take effect is masked, and a photographing speed in an HDR continuous capture scenario is increased.

In a possible implementation of the first aspect, before delivering the first manual-exposure parameter to the image sensor, the electronic device may further determine whether the first manual-exposure frame is available for next photographing; and if the first manual-exposure frame is unavailable for the next photographing, deliver the first manual-exposure parameter to the image sensor, to indicate the image sensor to output, based on the first manual-exposure parameter, a manual-exposure frame needed for the next photographing; or if the first manual-exposure frame is available for the next photographing, in response to the second photographing operation, select the first manual-exposure frame and the at least one second image as the second photographing frame.

In this embodiment of this application, the electronic device first determines whether the first manual-exposure frame used in current photographing is available for the next photographing. If the first manual-exposure frame is available, no manual-exposure parameter needs to be set or delivered for the next photographing in advance, and the image sensor does not need to output, in advance, a manual-exposure frame to be used in the next photographing; instead, the first manual-exposure frame used in the current photographing is directly reused in the next photographing. If the first manual-exposure frame is unavailable, a manual-exposure parameter is set and delivered for the next photographing in advance. In this way, a same manual-exposure frame may be reused in two photographing operations, to implement reuse of the manual-exposure frame, reduce a quantity of times of delivering a manual-exposure parameter, and further increase a photographing speed.

In a possible implementation of the first aspect, in a process of determining whether the first manual-exposure frame is available for the next photographing, the electronic device may predict time of the next photographing based on photographing time of the first photographing operation and a photographing interval; and if a time interval between the time of the next photographing or a timestamp of a reference frame for the next photographing and a timestamp of the first manual-exposure frame is greater than a preset time threshold, determine that the first manual-exposure frame is unavailable for the next photographing; or if a time interval between the time of the next photographing or a timestamp of a reference frame for the next photographing and a timestamp of the first manual-exposure frame is less than or equal to a preset time threshold, determine that the first manual-exposure frame is available for the next photographing. The timestamp of the reference frame for the next photographing is determined based on the time of the next photographing. For example, after the time of the next photographing is determined, the first 100 ms or 50 ms of the time of the next photographing is used as the timestamp of the reference frame for the next photographing.

In this way, based on the predicted photographing interval, the photographing time of the current photographing, and the timestamp of the manual-exposure frame, a manual-exposure frame close to the time of the next photographing is reused, and a manual-exposure frame far away from the time of the next photographing is not reused, to implement frame reuse of the manual-exposure frame and increase a photographing speed while ensuring photographing effect.

In a possible implementation of the first aspect, in response to the second photographing operation, the electronic device may deliver a second manual-exposure parameter to the image sensor, to indicate the image sensor to perform exposure processing based on the second manual-exposure parameter to obtain a third manual-exposure frame, where the third manual-exposure frame is cached in the cache space. To be specific, the electronic device may set and deliver a manual-exposure parameter for next photographing in advance each time during photographing, to increase a photographing speed.

Alternatively, in response to the second photographing operation, if determining that the second manual-exposure frame is unavailable for next photographing, the electronic device may deliver a second manual-exposure parameter to the image sensor, to indicate the image sensor to perform exposure processing based on the second manual-exposure parameter to obtain a third manual-exposure frame, where the third manual-exposure frame is cached in the cache space. To be specific, the electronic device may not need to set or deliver a manual-exposure parameter for next photographing in advance each time during photographing, but sets and delivers a manual-exposure parameter in advance when a manual-exposure frame for current photographing cannot be reused in next photographing. This reduces a quantity of times of delivering a manual-exposure parameter, and further increases a photographing speed.

In a possible implementation of the first aspect, a part of first images and a part of second images are same images. In this way, in addition to frame reuse of a manual-exposure frame, frame reuse of an image different from the manual-exposure frame may be further implemented, to further increase a photographing speed.

In a possible implementation of the first aspect, when displaying the photographing preview interface, the electronic device may cache, in the cache space, an image that is captured by the image sensor and that corresponds to the photographing preview interface. In this case, the first image is an image cached in the cache space before the first photographing operation, the first manual-exposure frame is an image cached in the cache space before the first photographing operation or the second photographing operation, and the second image is an image cached in the cache space before the second photographing operation. In this way, the first image and the second image are cached in advance before a photographing operation is received, so that when the photographing operation is received, an image needed for current photographing can be directly obtained from the cache space, without a need to wait for the image sensor to output a frame. This further increases a photographing speed. In addition, during implementation of frame reuse of an image different from a manual-exposure frame, the reused image is further cached in advance, to further increase a photographing speed.

For example, both the first image and the second image are normal-exposure images cached by the electronic device in the ZSL queue, and the manual-exposure frame includes a long-exposure image and a short-exposure image. In this case, in addition to the long-exposure image and the short-exposure image, the normal-exposure image is further reused. In this way, time taken to wait for the image sensor to output an image needed for the current photographing can be reduced through frame reuse, and the time taken to wait for the image sensor to output the image needed for the current photographing can also be reduced by caching the image in advance, to increase a photographing speed.

In a possible implementation of the first aspect, the cache space is a zero shutter lag image cache queue, namely, a ZSL image queue.

In a possible implementation of the first aspect, the first photographing frame includes a cached image in the cache space, or includes a cached image in the cache space and a historical cached image, where the historical cached image is an image that is cached in the cache space before the first photographing operation but is not cached in the cache space and is persistently stored in a storage medium during the first photographing operation, and the second image is a cached image in the cache space, or an image that is cached in the cache space before the second photographing operation but is not cached in the cache space and is persistently stored in the storage medium during the second photographing operation. In this way, a reused image is cached in the cache space, or a reused image is persistently stored in the storage medium, to implement frame reuse and increase a photographing speed.

In a possible implementation of the first aspect, in a process of selecting the first photographing frame, if a target cached image exists in the cache space or first target information exists in historical frame storage space, the electronic device selects the target cached image or an image corresponding to the first target information as the first manual-exposure frame, where the historical frame storage space is used to store information about a photographing frame selected for historical photographing, the photographing frame selected for the historical photographing is persistently stored in the storage medium, and the target cached image and the image corresponding to the first target information are manual-exposure frames available for the current photographing; selects the at least one first image from the historical frame storage space and/or the cache space; and for an image selected from the cache space, deletes the selected image from the cache space, persistently stores the selected image in the storage medium, and stores information about the selected image in the historical storage space, where the selected image includes the first manual-exposure frame and/or the first image.

In this embodiment of this application, during frame selection for the current photographing, after a photographing frame needed this time is selected from the cache space, the photographing frame selected for the current photographing is deleted from the cache space, information about the photographing frame is stored in the historical frame storage space, and the photographing frame is persistently stored in the storage medium. In this way, even if a photographing frame in the cache space is deleted after the frame is selected for photographing, a photographing frame used in previous photographing may still be obtained during next photographing based on information about the photographing frame that is stored in the historical frame storage space and the photographing frame in the storage medium, and the photographing frame used in the previous photographing is reused, to implement frame reuse and increase a photographing speed. In addition, the photographing frame is stored in the historical frame storage space and the storage medium, without being affected by a size of the cache space. This can save memory while ensuring a frame reuse rate.

In a possible implementation of the first aspect, if determining that the target cached image does not exist in the cache space and the first target information does not exist in the historical frame storage space, the electronic device delivers a fourth manual-exposure parameter to the image sensor, to indicate the image sensor to perform exposure processing based on the fourth manual-exposure parameter to obtain a manual-exposure frame, and selects the manual-exposure frame as the first manual-exposure frame. In this way, when no reusable manual-exposure frame exists, the electronic device may deliver a manual-exposure parameter for current photographing after receiving a current photographing operation, to obtain a manual-exposure frame needed for the current photographing.

In a possible implementation of the first aspect, a quantity of frames between the manual-exposure frame available for the current photographing and a reference frame for the first photographing operation is less than a preset quantity, or a time interval between a timestamp of the manual-exposure frame available for the current photographing and a timestamp of a reference frame for the first photographing operation is less than a preset threshold. This can ensure photographing effect while implementing frame reuse.

In a possible implementation of the first aspect, in a process of selecting the second photographing frame, the electronic device may select the second manual-exposure frame from the cache space, delete the second manual-exposure frame from the cache space, persistently store the second manual-exposure frame in the storage medium, and store information about the second manual-exposure frame in the historical storage space; and select the second image from the cache space, delete the second image from the cache space, persistently store the second image in the storage medium, and store information about the second image in the historical storage space; and/or select second target information from the historical storage space, where an image corresponding to the second target information is the second image. In this way, even if a photographing frame in the cache space is deleted after the frame is selected for photographing, a photographing frame used in previous photographing may still be obtained during next photographing based on information about the photographing frame that is stored in the historical frame storage space and the photographing frame in the storage medium, and the photographing frame used in the previous photographing is reused, to implement frame reuse and increase a photographing speed. In addition, the photographing frame is stored in the historical frame storage space and the storage medium, without being limited by a size of the cache space. This can save memory while ensuring a frame reuse rate.

In a possible implementation of the first aspect, in a process of selecting the first photographing frame, if determining that a target cached image exists in the cache space, the electronic device selects the target cached image as the first manual-exposure frame, where the target cached image is a manual-exposure frame available for the current photographing; selects the at least one first image from the cache space; and keeps the first manual-exposure frame and the first image cached in the cache space, and waits for removal by a storage mechanism of the cache space.

Correspondingly, in a process of selecting the second photographing frame, the electronic device may select the second manual-exposure frame and the second image from the cache space, keep the second manual-exposure frame and the second image cached in the cache space, and wait for removal by the storage mechanism of the cache space.

In this way, after a photographing frame needed for the current photographing is selected from the cache space, the photographing frame in the cache space is not deleted, but waits for removal by the storage mechanism (for example, a first in first out mechanism). A photographing frame used in previous photographing may still be obtained from the cache space during next photographing, to implement frame reuse and increase a photographing speed.

In a possible implementation of the first aspect, in a process of generating the first photographing image based on the first photographing frame, if an operation of viewing a thumbnail is detected, or a camera application is running in the background or closed, or a camera application is running in the background or closed and a preset trigger condition is detected, the electronic device obtains the first photographing frame from a storage medium, and performs photographing algorithm processing on the first photographing frame to obtain the first photographing image.

Correspondingly, in a process of generating the second photographing image based on the second photographing frame, if an operation of viewing a thumbnail is detected, or the camera application is running in the background or closed, or the camera application is running in the background or closed and a preset trigger condition is detected, the electronic device obtains the second photographing frame from the storage medium, and performs photographing algorithm processing on the second photographing frame to obtain the second photographing image.

In this embodiment of this application, during photographing, the electronic device does not immediately perform photographing algorithm processing on a photographing frame, but stores the photographing frame in the storage medium, and performs photographing algorithm processing when an operation of viewing a thumbnail is detected, or the camera application is running in the background or closed, or the camera application is running in the background or closed and a preset trigger condition is detected. In this way, in comparison with a case in which all photographing algorithm processing is continuously performed during photographing, in this embodiment of this application, photographing algorithm processing is performed only after a photographing process is quit. This reduces occupation of compute resources and memory resources during photographing, and therefore alleviates problems such as frame freezing and heating of the device, improves photographing performance, and improves photographing experience of a user. In addition, the photographing frame is stored in the storage medium, and a reused image frame does not need to be repeatedly written to a disk. This not only saves disk space, but also can reduce time taken to store an image in the disk, to increase a photographing processing speed. In a possible implementation of the first aspect, the preset trigger condition includes at least one of the following: an operation of starting an image access application, an operation of viewing an image, an operation of sharing an image, an operation of editing an image, a system being in an idle state, a screen being off, a running memory being higher than a first threshold, device temperature being lower than a first temperature threshold, or processor load being lower than a second threshold. In this way, when a user needs to view, edit, share, or perform another operation on image data, photographing algorithm processing can be performed in a timely manner, to enable the user to view a photographing image in a timely manner. In addition, when a system status meets a condition, to be specific, the running memory, the device temperature, the processor load, and the like meet requirements, photographing algorithm processing may be automatically triggered, to further alleviate problems such as frame freezing and heating of the device.

According to a second aspect, an embodiment of this application provides a photographing processing method. The method is applied to an electronic device, and the method includes:
in a photographing preview mode, caching, in a ZSL queue, a plurality of frames of images captured by an image sensor;
in response to a first photographing operation, selecting a first photographing frame from the ZSL queue, persistently storing the first photographing frame in a storage medium, storing metadata of the first photographing frame in a historical frame queue, and deleting the first photographing frame from the ZSL queue;
generating a first photographing image based on the first photographing frame in the storage medium;
in response to a second photographing operation, selecting a target image from the ZSL queue, selecting target metadata from the metadata of the first photographing frame in the historical frame queue, persistently storing the target image in the storage medium, and deleting the target image from the cache queue; and
generating a second photographing image based on a second photographing frame in the storage medium, where the second photographing frame includes the target image and a photographing frame corresponding to the target metadata. A part of images of the first photographing frame are the same as a part of images of the second photographing frame. To be specific, a same image frame may be reused in two photographing operations, to implement frame reuse.

It can be learned from the foregoing technical solution that, in this embodiment of this application, during frame selection for current photographing, after a photographing frame needed this time is selected from the ZSL queue, the photographing frame selected for the current photographing is deleted from the ZSL queue, information about the photographing frame is stored in the historical frame queue, and the photographing frame is persistently stored in the storage medium. In this way, even if a photographing frame in the ZSL queue is deleted after the frame is selected for photographing, a photographing frame used in previous photographing may still be obtained during next photographing based on metadata of the photographing frame that is stored in the historical frame queue and the photographing frame in the storage medium, and the photographing frame used in the previous photographing is reused, to implement frame reuse and increase a photographing speed. In addition, frame reuse of the photographing frame is implemented by using the historical frame queue and the storage medium, without being limited by a length of the ZSL queue. This can save memory while ensuring a frame reuse rate.

In a possible implementation of the second aspect, in a process of generating the first photographing image based on the first photographing frame, if an operation of viewing a thumbnail is detected, or a camera application is running in the background or closed, or a camera application is running in the background or closed and a preset trigger condition is detected, the electronic device obtains the first photographing frame from the storage medium, and performs photographing algorithm processing on the first photographing frame to obtain the first photographing image.

Correspondingly, in a process of generating the second photographing image based on the second photographing frame, if an operation of viewing a thumbnail is detected, or the camera application is running in the background or closed, or the camera application is running in the background or closed and a preset trigger condition is detected, the electronic device obtains the second photographing frame from the storage medium, and performs photographing algorithm processing on the second photographing frame to obtain the second photographing image.

In this embodiment of this application, during photographing, the electronic device does not immediately perform photographing algorithm processing on a photographing frame, but stores the photographing frame in the storage medium, and performs photographing algorithm processing when an operation of viewing a thumbnail is detected, or the camera application is running in the background or closed, or the camera application is running in the background or closed and a preset trigger condition is detected. In this way, in comparison with a case in which all photographing algorithm processing is continuously performed during photographing, in this embodiment of this application, photographing algorithm processing is performed only after a photographing process is quit. This reduces occupation of compute resources and memory resources during photographing, and therefore alleviates problems such as frame freezing and heating of the device, improves photographing performance, and improves photographing experience of a user.

In a possible implementation of the second aspect, the preset trigger condition includes at least one of the following: an operation of starting an image access application, an operation of viewing an image, an operation of sharing an image, an operation of editing an image, a system being in an idle state, a screen being off, a running memory being higher than a first threshold, device temperature being lower than a first temperature threshold, or processor load being lower than a second threshold. In this way, when a user needs to view, edit, share, or perform another operation on image data, photographing algorithm processing can be performed in a timely manner, to enable the user to view a photographing image in a timely manner. In addition, when a system status meets a condition, to be specific, the running memory, the device temperature, the processor load, and the like meet requirements, photographing algorithm processing may be automatically triggered, to further alleviate problems such as frame freezing and heating of the device.

In a possible implementation of the second aspect, in an HDR photographing scenario, an image cached in the ZSL queue is usually a normal-exposure image. However, to increase a dynamic range of an image, the electronic device further needs to control the image sensor to output at least one manual-exposure frame, for example, a long-exposure image or a short-exposure image. In this case, after receiving the first photographing operation, the electronic device may not only select the first photographing frame, but also set a manual-exposure parameter for next photographing, deliver the manual-exposure parameter for the next photographing to the image sensor, to indicate the image sensor to output, based on the manual-exposure parameter, a manual-exposure frame to be used in the next photographing, and cache the manual-exposure frame in the ZSL queue. In this way, after receiving a next photographing operation, namely, the second photographing operation, the electronic device may select, from the ZSL queue, a manual-exposure frame available for current photographing and an image with another exposure (for example, a normal-exposure image), without a need to set a manual-exposure parameter for the current photographing after receiving the second photographing operation, or wait for a manual-exposure parameter for the current photographing to take effect. This masks a period between time at which the manual-exposure parameter is set and time at which the manual-exposure parameter takes effect, to further increase an HDR photographing speed.

That is, after a photographing operation is received, a manual-exposure parameter is set and delivered for next photographing in advance, to mask time taken for the manual-exposure parameter to take effect, and increase a photographing speed.

In a possible implementation of the second aspect, each time during photographing, the electronic device may set a manual-exposure parameter and deliver the manual-exposure parameter for next photographing in advance. This can mask time taken for a manual-exposure parameter, used for photographing each time, to take effect, to increase a photographing speed.

In a possible implementation of the second aspect, the electronic device may further reuse a manual-exposure frame, without a need to set or deliver a manual-exposure parameter for next photographing in advance each time during photographing, to reduce a quantity of times of delivering a manual-exposure parameter, and further increase a photographing speed. In this case, after selecting a frame for photographing and before setting and delivering a manual-exposure parameter for next photographing, the electronic device may further determine whether a manual-exposure frame used in current photographing is available for the next photographing. If the manual-exposure frame used in the current photographing is available for the next photographing, the electronic device does not need to set or deliver a manual-exposure parameter for the next photographing in advance, and may reuse the manual-exposure frame used in the current photographing during the next photographing, that is, implement reuse of the manual-exposure frame. If the manual-exposure frame used in the current photographing is unavailable for the next photographing, the electronic device sets and delivers a manual-exposure parameter for the next photographing in advance.

That is, after selecting the first photographing frame and/or the second photographing frame, the electronic device may first determine whether a manual-exposure frame used in current photographing is available for next photographing, and then determine whether to set and deliver a manual-exposure parameter for the next photographing in advance. In addition, if the manual-exposure frame used in the current photographing is obtained based on a manual-exposure parameter that is set and delivered for the current photographing, whether the manual-exposure frame used in the current photographing is available for the next photographing may alternatively not be determined, and it is considered by default that the manual-exposure frame used in the current photographing is available for the next photographing.

In a possible implementation of the second aspect, the electronic device may reuse a manual-exposure frame to further increase a photographing speed. In this case, in a process of selecting a frame for photographing, the electronic device may first determine whether a manual-exposure frame available for current photographing exists in the ZSL queue and/or the historical frame queue, that is, determine whether there is a reusable manual-exposure frame. If there is a reusable manual-exposure frame, the electronic device selects the manual-exposure frame as a manual-exposure frame to be used in the current photographing, and after selecting the manual-exposure frame to be used in the current photographing, further predicts whether the manual-exposure frame to be used in the current photographing is available for next photographing. If no manual-exposure frame available for the current photographing exists in the ZSL queue or the historical frame queue, the electronic device needs to set and deliver a manual-exposure parameter, to indicate the image sensor to output a manual-exposure frame based on the manual-exposure parameter, and cache the manual-exposure frame in the ZSL queue; and after the image sensor outputs the manual-exposure frame, selects the manual-exposure frame and another image from the ZSL queue, to obtain a photographing frame for the current photographing. In addition, if a manual-exposure parameter for the current photographing is delivered during the current photographing, whether a manual-exposure frame for the current photographing is available for the next photographing may alternatively not need to be determined.

That is, in a process of selecting the first photographing frame and/or the second photographing frame, the electronic device may first determine whether a manual-exposure frame available for current photographing exists in the ZSL queue and/or the historical frame queue; and if yes, select the manual-exposure frame as a manual-exposure frame for the current photographing; or if no, set and deliver a manual-exposure parameter, to obtain a manual-exposure frame for the current photographing.

In a possible implementation of the second aspect, in a process of determining whether the manual-exposure frame used in the current photographing is available for the next photographing, the electronic device may predict time of the next photographing based on photographing time of a current photographing operation and a photographing interval; and if a time interval between the time of the next photographing or a timestamp of a reference frame for the next photographing and a timestamp of the manual-exposure frame used in the current photographing is greater than a preset time threshold, determine that the manual-exposure frame used in the current photographing is unavailable for the next photographing; or if a time interval between the time of the next photographing or a timestamp of a reference frame for the next photographing and a timestamp of the manual-exposure frame used in the current photographing is less than or equal to a preset time threshold, determine that the manual-exposure frame used in the current photographing is available for the next photographing. In this way, based on the predicted photographing interval, the time of the current photographing, and the timestamp of the manual-exposure frame used in the current photographing, a manual-exposure frame close to the time of the next photographing is reused, and a manual-exposure frame far away from the time of the next photographing is not reused, to implement frame reuse of the manual-exposure frame and increase a photographing speed while ensuring photographing effect.

In a possible implementation of the second aspect, when determining whether a manual-exposure frame available for the current photographing exists in the ZSL queue and/or the historical frame queue, the electronic device may perform determining based on a quantity of frames between a manual-exposure frame and the reference frame for the current photographing. If a manual-exposure frame exists and a quantity of frames between the manual-exposure frame and the reference frame for the current photographing is less than or equal to a preset quantity of frames (for example, 7 frames), it is considered that the manual-exposure frame is available for the current photographing. On the contrary, if the quantity of frames is greater than the preset quantity of frames, it is considered that the manual-exposure frame is unavailable for the current photographing. Alternatively, the electronic device may perform determining based on a time interval between a timestamp of a manual-exposure frame and the timestamp of the reference frame for the current photographing. If a manual-exposure frame exists and a time interval between a timestamp of the manual-exposure frame and the timestamp of the reference frame for the current photographing is less than or equal to a preset threshold, it is considered that the manual-exposure frame is available for the current photographing. On the contrary, if the time interval is greater than the preset threshold, it is considered that the manual-exposure frame is unavailable for the current photographing. That is, a time interval between a timestamp of a manual-exposure frame available for the current photographing and the timestamp of the reference frame for the current photographing is less than the preset threshold.

According to a third aspect, an embodiment of this application provides an electronic device, including a memory, a processor, and a computer program stored in the memory and capable of running in the processor. When the processor executes the computer program, the method according to any one of the first aspect or the second aspect is implemented.

According to a fourth aspect, an embodiment of this application provides a computer-readable storage medium. The computer-readable storage medium stores a computer program. When the computer program is executed by a processor, the method according to any one of the first aspect or the second aspect is implemented.

According to a fifth aspect, an embodiment of this application provides a chip system. The chip system includes a processor. The processor is coupled to a memory. The processor executes a computer program stored in the memory, to implement the method according to any one of the first aspect or the second aspect. The chip system may be a single chip or a chip module including a plurality of chips.

According to a sixth aspect, an embodiment of this application provides a computer program product. When the computer program product is run on an electronic device, the electronic device is enabled to perform the method according to any one of the first aspect or the second aspect.

It can be understood that, for beneficial effects of the second aspect to the sixth aspect, reference may be made to related descriptions in the first aspect or the second aspect. Details are not described herein again.

### BRIEF DESCRIPTION OF DRAWINGS

FIG. 1A to FIG. 1C are a diagram of a scenario of performing photographing by using a mobile phone according to an embodiment of this application;
FIG. 2A is a schematic flowchart of non-ZSL photographing according to an embodiment of this application;
FIG. 2B is a schematic flowchart of ZSL photographing according to an embodiment of this application;
FIG. 3 is a diagram of a process of caching an image in a ZSL queue according to an embodiment of this application;
FIG. 4A is a diagram of multi-frame synthesis according to an embodiment of this application;
FIG. 4B is a diagram of multi-frame synthesis based on a ZSL queue according to an embodiment of this application;
FIG. 5 is a diagram of comparison between a photographing speed obtained before frame reuse and a photographing speed obtained after the frame reuse according to an embodiment of this application;
FIG. 6 is a diagram of a solution for implementing frame reuse according to an embodiment of this application;
FIG. 7 is a diagram of another solution for implementing frame reuse according to an embodiment of this application;
FIG. 8A is a diagram of reusing a manual-exposure frame according to an embodiment of this application;
FIG. 8B is a block diagram of a process of obtaining a manual-exposure frame according to an embodiment of this application;
FIG. 9 is a diagram of setting a manual-exposure frame in advance according to an embodiment of this application;
FIG. 10A is a diagram of reusing a manual-exposure frame and setting a manual-exposure frame in advance according to an embodiment of this application;
FIG. 10B is a block diagram of a process of obtaining a manual-exposure frame according to an embodiment of this application;
FIG. 11A is a diagram of a photographing speed according to an embodiment of this application;
FIG. 11B is a diagram of a photographing speed according to an embodiment of this application;
FIG. 12 is a diagram of a structure of an electronic device 200 according to an embodiment of this application;
FIG. 13 is a block diagram of a process of a photographing processing method according to an embodiment of this application; and
FIG. 14 is a block diagram of a process of a photographing processing method according to an embodiment of this application.

### DESCRIPTION OF EMBODIMENTS

In the following descriptions, for illustration instead of limitation, specific details such as a particular system structure and a technology are provided for a thorough understanding of embodiments of this application.

The following describes related content that may be included in embodiments of this application.

### Photographing scenario:

A portable electronic device, for example, a mobile phone or a tablet computer, may implement a photographing function through a photographing application and related hardware such as a graphics processing unit (graphics processing unit, GPU), a camera, an image signal processor (image signal processor, ISP), a display, and an application processor. A photographing application installed on an electronic device, for example, a mobile phone, may invoke a camera and other hardware to perform photographing. The photographing application may be a built-in camera application in an operating system, or may be another third-party application with a photographing function.

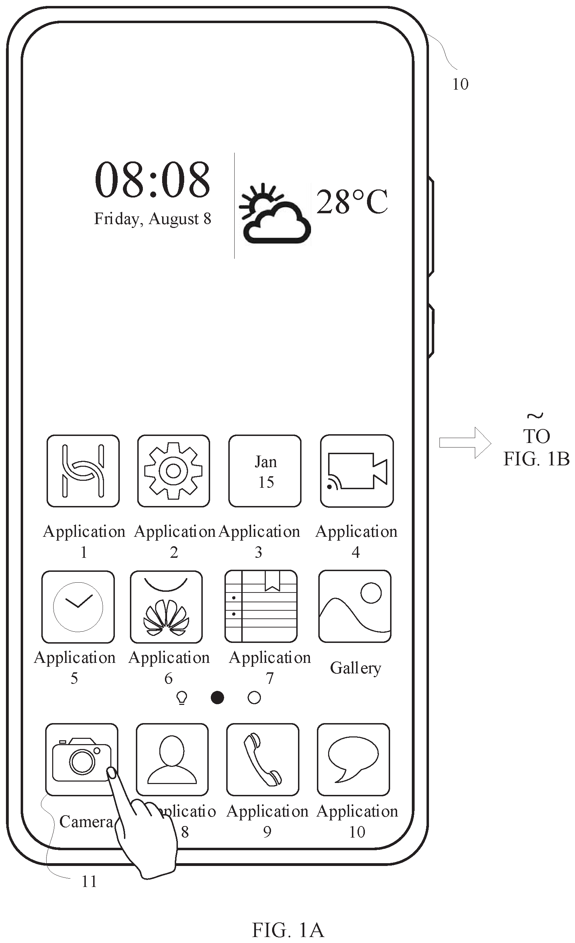

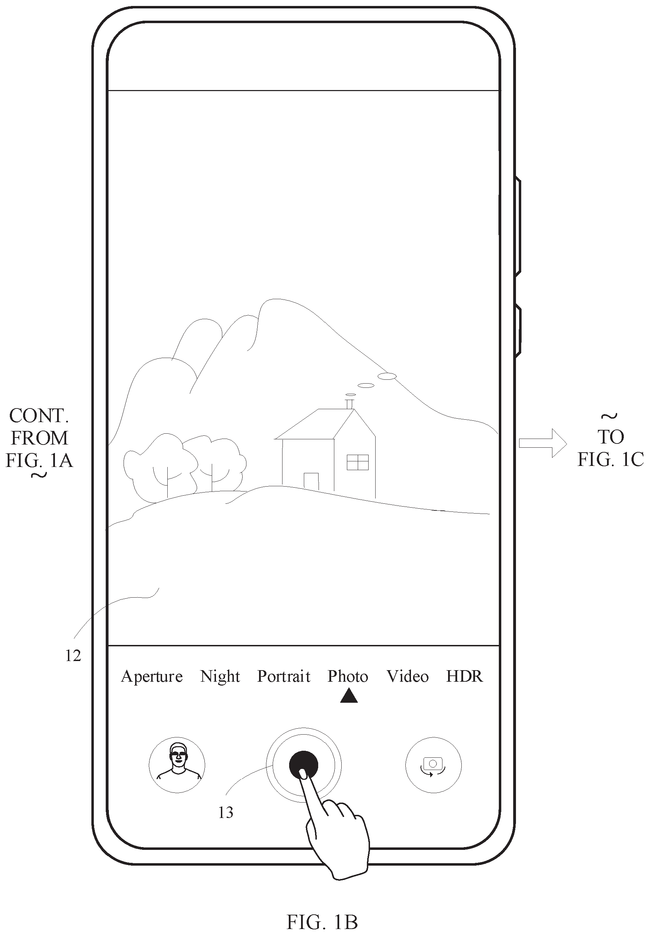

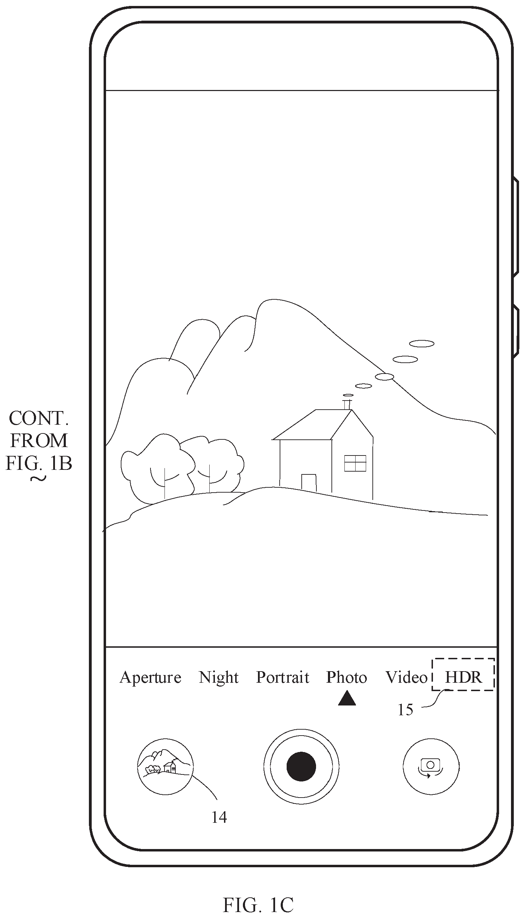

For example, FIG. 1A to FIG. 1C are a diagram of a scenario of performing photographing by using a mobile phone according to an embodiment of this application. Icons of applications, such as an Application 1 to an Application 10, a Gallery application, and a Camera application 11, are displayed on a home screen of the mobile phone 10. A user taps the Camera application 11. In response to the tap operation, the mobile phone 10 starts the Camera application 11, and displays a photographing preview interface 12 of the Camera application 11 by default.

The photographing preview interface 12 includes a viewfinder frame and a capture button 13. The viewfinder frame is used to display a photographing preview image. After the Camera application 11 is started, the mobile phone 10 enters a photographing preview stage (or a photographing preview mode) by default, continuously captures a preview image through a camera in the photographing preview stage, and displays the preview image in the viewfinder frame on the photographing preview interface 12.

When the mobile phone 10 is in the photographing preview mode, the user taps the capture button 13. In response to the tap operation, the mobile phone 10 performs a photographing operation to obtain a photographing image, and displays a thumbnail 14 of the photographing image on the photographing preview interface 12.

The mobile phone 10 may further support capturing an HDR image. As shown in FIG. 1A to FIG. 1C, the mobile phone 10 includes an HDR mode control 15. The user may tap the HDR mode control 15, to indicate the mobile phone 10 to enter an HDR photographing mode to capture an HDR image. Certainly, the mobile phone 10 may alternatively provide an HDR on/off control on the photographing preview interface 12, so that the user enables or disables an HDR mode by using the HDR on/off control. When the HDR mode is enabled by using the HDR on/off control, the mobile phone 10 enters the HDR photographing mode. When the HDR mode is disabled by using the HDR on/off control, the mobile phone 10 exits the HDR photographing mode.

### Zero shutter lag ZSL:

To reduce a photographing delay, an electronic device, for example, a mobile phone, may perform photographing by using a zero shutter lag method, so that an image obtained through photographing is consistent with a picture viewed by a user on a photographing preview interface.

During photographing, there is a specific time difference between time at which the user taps a capture button and time at which the electronic device actually completes image capture, causing a photographing delay. A process from tapping the capture button to completing image capture includes a plurality of processing processes such as focusing, exposure calculation, image capture, and image processing. Each processing process needs to take specific time, causing a specific delay.

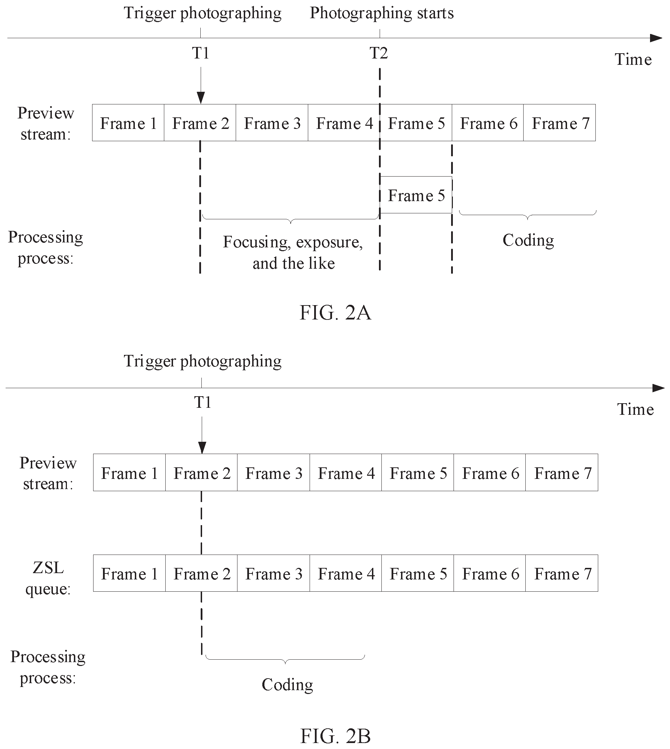

For example, FIG. 2A is a schematic flowchart of non-ZSL photographing according to an embodiment of this application. Based on the scenario shown in FIG. 1A to FIG. 1C, when starting the Camera application 11, the mobile phone 10 invokes related hardware, for example, the camera, for image capture, to obtain a preview stream, and displays the preview stream on the photographing preview interface 12. In this way, the user can view a photographing preview picture in the viewfinder frame on the photographing preview interface 12. As shown in FIG. 2A, the preview stream includes a frame 1 to a frame 7 (namely, a frame 1 to a frame 7). In terms of timing, the frame 1 is the earliest, and the frame 7 is the latest. The mobile phone 10 sequentially displays the frame 1 to the frame 7 on the preview photographing interface 102.

At a moment T1, the user taps the capture button 13 to trigger photographing. In this case, an image frame displayed on the photographing preview interface 12 is the frame 2. In response to the operation of triggering photographing by the user, the mobile phone 10 performs processing processes such as autofocus and exposure calculation, to determine an image focus point, an exposure parameter, and the like. At a moment T2, the mobile phone 10 completes the processing processes such as focusing and exposure calculation, and starts to perform photographing based on the exposure parameter, the image focus point, and the like, to obtain an image frame captured by an image sensor, where the image frame is a frame 5. In this case, an image frame displayed on the photographing preview interface 12 is the frame 5. After capturing the frame 5 based on the exposure parameter and the like, the mobile phone 10 may perform processes, such as coding, on the frame 5 to obtain a final photographing image. The frame 5 in the preview stream and the frame 5 captured based on the exposure parameter and the like are not a same image, but picture content of the two frames is the same.

As shown in FIG. 2A, the user triggers photographing at the moment T1, and an image displayed on the photographing preview interface 12 is the frame 2. In other words, when the user triggers photographing, picture content seen by the user is content corresponding to the frame 2. However, because the mobile phone 10 needs to perform a series of processing processes such as focusing and exposure, an image frame actually captured by the mobile phone 10 (namely, an image actually obtained through photographing) is the frame 5, and picture content of the frame 5 is inconsistent with picture content of the frame 2. In this case, the image actually captured by the mobile phone 10 is inconsistent with the image seen by the user when the user triggers photographing, and there is a specific delay between the two images.

When an electronic device performs photographing in a zero shutter lag mode, after the electronic device starts a camera application and enters a photographing preview stage, in addition to generating a photographing preview image, the electronic device further caches an image frame in cache space. When a user triggers photographing, the electronic device may quickly obtain a needed photographing frame from the cache space, and generate a photographing image based on the photographing frame.

In zero shutter lag, the image frame is pre-generated and cached in the photographing preview stage, so that a needed image can be quickly obtained from the cache space when the user triggers photographing. This can significantly reduce a photographing delay, and provide smoother and more immediate photographing experience.

The photographing preview image is to be displayed on a photographing preview interface. The image frame cached in the cache space may be a raw image corresponding to the photographing preview image. A size of frame data of the photographing preview image may be less than a size of frame data of the cached image frame.

For example, FIG. 2B is a schematic flowchart of ZSL photographing according to an embodiment of this application. Based on the scenario shown in FIG. 1A to FIG. 1C, when starting the Camera application 11, the mobile phone 10 displays the photographing preview interface 12 by default, and enters the photographing preview stage.

In the photographing preview stage, the mobile phone 10 generates both a preview stream and a to-be-cached image frame, displays the preview stream on the photographing preview interface 12, and caches the to-be-cached image frame in a ZSL queue. As shown in FIG. 2B, the preview stream sequentially includes a frame 1 to a frame 7 (namely, a frame 1 to a frame 7), and the mobile phone 10 sequentially displays the frame 1 to the frame 7 on the preview photographing interface 102. The ZSL queue includes a frame 1 to a frame 7. The frame 1 to the frame 7 in the ZSL queue and the frame 1 to the frame 7 in the preview stream are not same images, but are images with same picture content.

At a moment T1, the user taps the capture button 13 to trigger photographing. In this case, an image frame displayed on the photographing preview interface 12 is the frame 2. Because the mobile phone 10 has pre-cached, in the ZSL queue, an image frame corresponding to a preview picture, in response to the operation of triggering photographing by the user, the mobile phone 10 obtains, from the ZSL queue, an image frame corresponding to a preview picture at the moment T1, and performs operations, such as coding, on the obtained image frame to obtain a final photographing image. In this case, an image actually captured by the mobile phone 10 is the frame 2, which is consistent with an image seen by the user when the user triggers photographing. This achieves photographing effect of what you see is what you get.

### ZSL queue:

The ZSL queue is an image cache queue, and is used to cache, in a photographing preview stage, an image frame corresponding to a photographing preview picture.

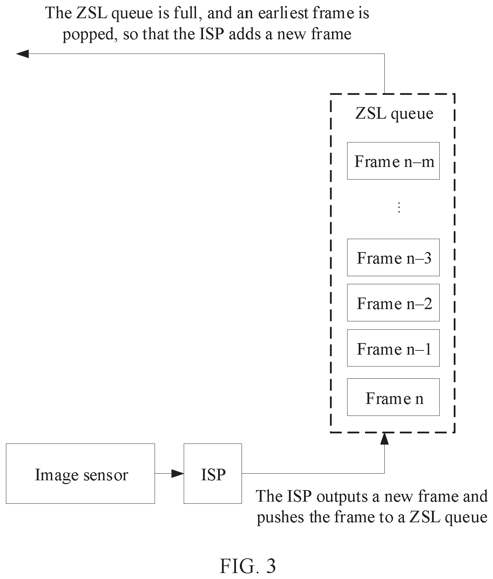

For example, FIG. 3 is a diagram of a process of caching an image in a ZSL queue according to an embodiment of this application. An image captured by an image sensor is transmitted to an ISP. The ISP performs corresponding processing on the image captured by the image sensor, and then stores an image frame in the ZSL queue.

In FIG. 3, a plurality of image frames, such as a frame n, a frame n-1, a frame n-2, a frame n-3, ..., and a frame n-m, are cached in the ZSL queue. n is a positive integer greater than 1 or equal to 1, and n-m is greater than or equal to 1. The frame n may be an n^{th} image captured by the image sensor. Similarly, the frame n-m is an (n-m)^{th} image captured by the image sensor.

The ZSL queue has a first in first out mechanism. To be specific, an image frame that enters the ZSL queue earlier is removed from the ZSL queue earlier. When the ZSL queue is full, to be specific, a maximum capacity of the ZSL queue is reached, an earliest image frame in the ZSL queue (to be specific, an image frame that enters the ZSL queue first) may be removed from the ZSL queue through a pop instruction, and the ISP adds a new image frame to the ZSL queue. After the ISP outputs the new image frame, the new image frame may be added to the ZSL queue through a push instruction.

In the ZSL queue in FIG. 3, the frame n is a latest image frame, to be specific, the frame n enters the ZSL queue last; and the frame n-m is an earliest image frame, to be specific, the frame n-m enters the ZSL queue first. Based on the first in first out mechanism, the frame n-m may be removed from the ZSL queue, and the ISP adds a frame n+1 to the ZSL queue.

### Multi-frame synthesis:

Fusing, by an electronic device, for example, a mobile phone, a plurality of frames of images to obtain a high-quality photographing image is a common photographing processing manner.

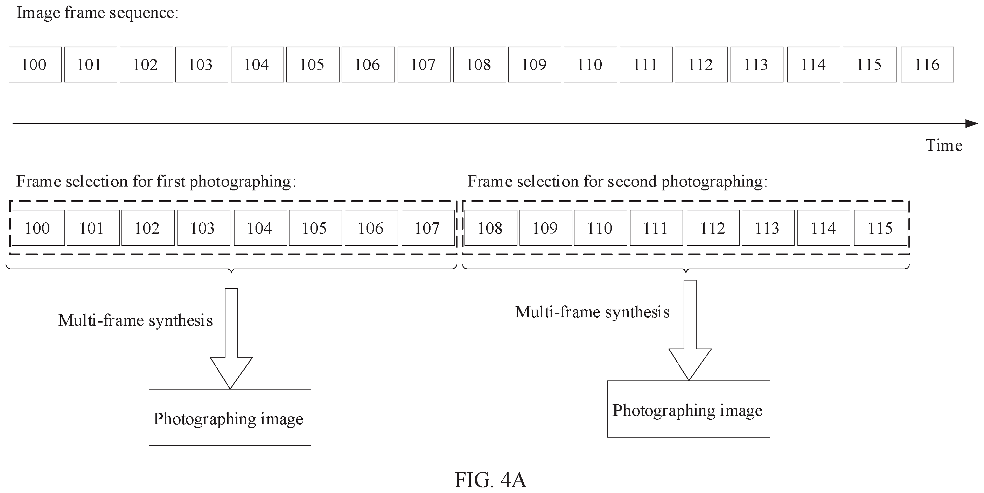

For example, it is assumed that eight image frames are selected for multi-frame synthesis each time during photographing. FIG. 4A is a diagram of multi-frame synthesis according to an embodiment of this application. An image frame sequence includes a frame 100 to a frame 116. Frame selection for first photographing and frame selection for second photographing are sequentially performed based on the image frame sequence. A number following a frame may indicate an order of a frame of image output by an image sensor. For example, the frame 100 is a 100^{th} frame of image output by the image sensor, and the frame 116 is a 116^{th} frame of image output by the image sensor.

The frame selection for the first photographing is a frame selection process for the first photographing, to select a photographing frame for the first photographing. The frame selection for the second photographing is a frame selection process for the second photographing, to select a photographing frame for the second photographing. The first photographing is performed before the second photographing.

As shown in FIG. 4A, during the frame selection for the first photographing, a total of eight frames of images, that is, the frame 100, the frame 101, the frame 102, the frame 103, the frame 104, the frame 105, the frame 106, and the frame 107, are selected from the image frame sequence, and multi-frame fusion is performed on the eight frames of images to obtain a photographing image for the first photographing. During the frame selection for the second photographing, a total of eight frames of images, that is, the frame 108, the frame 109, the frame 110, the frame 111, the frame 112, the frame 113, the frame 114, and the frame 115, are selected from the image frame sequence, and multi-frame synthesis is performed on the eight frames of images to obtain a photographing image for the second photographing.

The image frame sequence may be, but is not limited to, a plurality of frames of images cached in a ZSL queue. When a plurality of frames of images are selected from the ZSL queue for synthesis, the selected images are deleted from the ZSL queue.

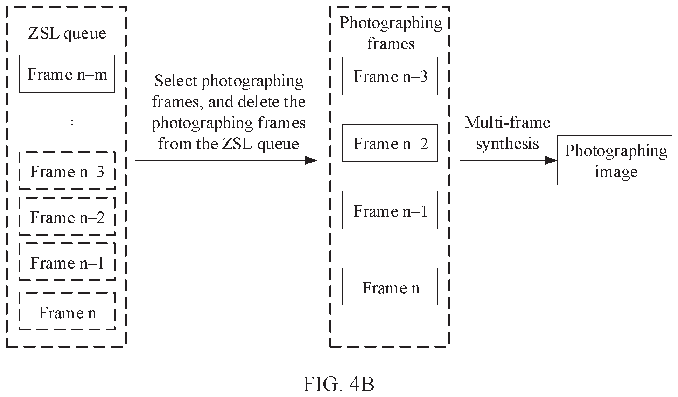

For example, FIG. 4B is a diagram of multi-frame synthesis based on a ZSL queue according to an embodiment of this application. A plurality of image frames, such as a frame n, a frame n-1, a frame n-2, a frame n-3, ..., and a frame n-m, are cached in the ZSL queue. The frame n, the frame n-1, the frame n-2, and the frame n-3 are selected from the ZSL queue as photographing frames, and multi-frame synthesis is performed on the frame n, the frame n-1, the frame n-2, and the frame n-3 to obtain a photographing image. The photographing frames are image frames used for photographing processing.

After the photographing frames are selected from the ZSL queue, the photographing frames are used for subsequent photographing processing. In addition, the photographing frames are deleted from the ZSL queue. To be specific, the frame n, the frame n-1, the frame n-2, and the frame n-3 are deleted from the ZSL queue. In FIG. 4B, the frame n, the frame n-1, the frame n-2, and the frame n-3 are indicated by a dashed-line box, to indicate that these image frames are deleted.

In the related technology, during multi-frame synthesis for photographing, images used for multi-frame synthesis in two photographing operations are different.

For example, as shown in FIG. 4A, images used for multi-frame synthesis in the first photographing is the frame 100 to the frame 107, and images used for multi-frame synthesis in the second photographing is the frame 108 to the frame 115. Image frames used in the two photographing operations are different.

For another example, as shown in FIG. 4B, after the frame n, the frame n-1, the frame n-2, and the frame n-3 are selected from the ZSL queue as photographing frames for current photographing, the frame n, the frame n-1, the frame n-2, and the frame n-3 are deleted from the ZSL queue. Therefore, when a photographing frame is selected from the ZSL queue for next photographing, any one of the frame n, the frame n-1, the frame n-2, and the frame n-3 cannot be selected. Consequently, images used for synthesis in the two photographing operations are different.

The inventors find during research that a photographing speed is reduced when images used for synthesis in two photographing operations are different. For example, an image sensor outputs frames at a frame rate of 30 fps, to be specific, outputs 30 frames of images per second, where fps indicates a quantity of frames transmitted for a picture per second (Frames Per Second). It is assumed that six frames of images are used in one photographing operation. Because different images are used in different photographing operations, photographing may be performed a maximum of five times within one second, in other words, a photographing speed is five images per second.

To increase the photographing speed, a quantity of frames used for multi-frame synthesis may be reduced. For example, the image sensor outputs frames at the frame rate of 30 fps. Originally, six frames of images are used in one photographing operation, photographing may be performed five times within one second, and the photographing speed is five images per second. However, in this case, five frames of images are used in one photographing operation, photographing may be performed six times within one second, and a photographing speed is six images per second. The photographing speed is higher. In addition, the photographing speed may alternatively be increased by directly outputting a single frame. However, although the photographing speed can be increased by reducing the quantity of frames used for multi-frame synthesis and directly outputting a single frame, photographing effect is compromised, and image quality of a photographing image is degraded.

In view of the related problems mentioned above, in embodiments of this application, a frame reuse solution is used to increase a photographing speed without degrading quality of a photographing image. Frame reuse means that a same image may be reused in two photographing operations. To be specific, at least one image of image frames used in the two photographing operations is the same. Usually, a reference frame is not reused.

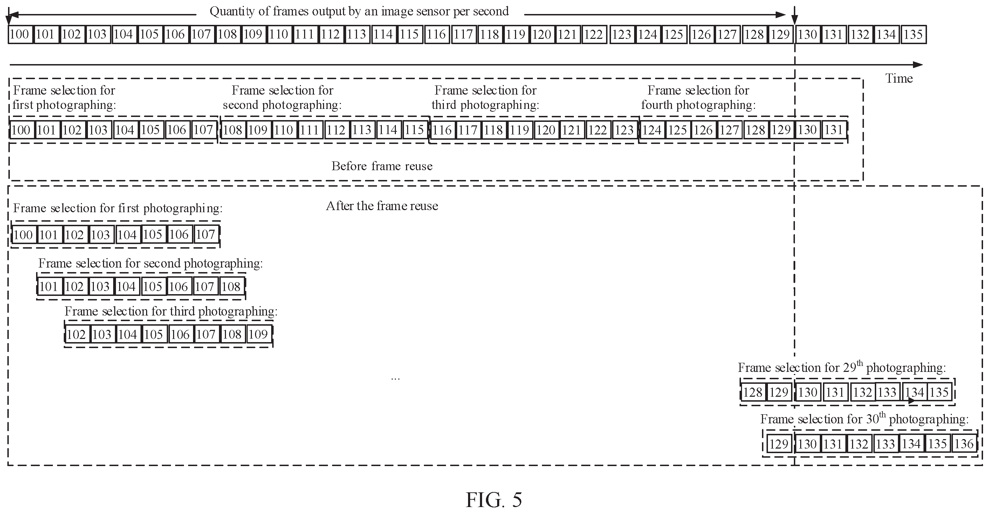

For example, FIG. 5 is a diagram of comparison between a photographing speed obtained before frame reuse and a photographing speed obtained after the frame reuse according to an embodiment of this application. It is assumed that eight frames of images are used for synthesis each time during photographing, and an image sensor outputs frame at a frame rate of 30 fps in a photographing preview stage, to be specific, a quantity of frames output by the image sensor per second is 30 frames. In FIG. 5, an image sequence includes a total of 36 frames of images in chronological order: a frame 100 to a frame 135. In this case, image frames output by the image sensor within one second are the frame 100 to the frame 129.

Before the frame reuse, image frames used in two photographing operations are different, and a maximum of four images may be captured within one second, in other words, a photographing speed is four images per second.

Specifically, during frame selection for first photographing, the frame 100, the frame 101, the frame 102, the frame 103, the frame 104, the frame 105, the frame 106, and the frame 107 are selected as photographing frames for the first photographing, and multi-frame synthesis is performed on the eight images to obtain a photographing image for the first photographing.

During frame selection for second photographing, the frame 108, the frame 109, the frame 110, the frame 111, the frame 112, the frame 113, the frame 114, and the frame 115 are selected as photographing frames for the second photographing, and multi-frame synthesis is performed on the eight images to obtain a photographing image for the second photographing.

During frame selection for third photographing, the frame 116, the frame 117, the frame 118, the frame 119, the frame 120, the frame 121, the frame 122, and the frame 123 are selected as photographing frames for the third photographing, and multi-frame synthesis is performed on the eight images to obtain a photographing image for the third photographing.

During frame selection for fourth photographing, the frame 124, the frame 125, the frame 126, the frame 127, the frame 128, the frame 129, the frame 130, and the frame 131 are selected as photographing frames for the fourth photographing, and multi-frame synthesis is performed on the eight images to obtain a photographing image for the fourth photographing.

After the frame reuse, to be specific, after the frame reuse solution is used, a same image frame may be reused in two photographing operations, and a maximum of 30 images may be captured within one second, in other words, a photographing speed is 30 images per second. The photographing speed is significantly increased.

Specifically, during frame selection for first photographing, the frame 100, the frame 101, the frame 102, the frame 103, the frame 104, the frame 105, the frame 106, and the frame 107 are selected as photographing frames for the first photographing, and multi-frame synthesis is performed on the eight images to obtain a photographing image for the first photographing.

During frame selection for second photographing, the frame 101, the frame 102, the frame 103, the frame 104, the frame 105, the frame 106, the frame 107, and the frame 108 are selected as photographing frames for the second photographing, and multi-frame synthesis is performed on the eight images to obtain a photographing image for the second photographing.

Through comparison between the frame selection for the first photographing and the frame selection for the second photographing, it can be learned that the image frames used in the first photographing and the images used in the second photographing include seven same images: the frame 101, the frame 102, the frame 103, the frame 104, the frame 105, the frame 106, and the frame 107. That is, the seven images are reused.

Similarly, during frame selection for third photographing, the frame 102, the frame 103, the frame 104, the frame 105, the frame 106, the frame 107, the frame 108, and the frame 109 are selected as photographing frames for the third photographing, and multi-frame synthesis is performed on the eight images to obtain a photographing image for the third photographing.

Through comparison between the frame selection for the second photographing and the frame selection for the third photographing, it can be learned that the image frames used in the second photographing and the images used in the third photographing include seven same images: the frame 102, the frame 103, the frame 104, the frame 105, the frame 106, the frame 107, and the frame 108. That is, the seven images are reused.

By analogy, subsequent frame selection for fourth photographing to frame selection for 28^{th} photographing are sequentially performed.

During frame selection for 29^{th} photographing, the frame 128, the frame 129, the frame 130, the frame 131, the frame 132, the frame 133, the frame 134, and the frame 135 are selected as photographing frames for the 29^{th} photographing, and multi-frame synthesis is performed on the eight images to obtain a photographing image for the 29^{th} photographing.

During frame selection for 30^{th} photographing, the frame 129, the frame 130, the frame 131, the frame 132, the frame 133, the frame 134, the frame 135, and the frame 136 are selected as photographing frames for the 30^{th} photographing, and multi-frame synthesis is performed on the eight images to obtain a photographing image for the 30^{th} photographing.

It can be learned from FIG. 5 that, after the frame reuse, seven images in previous photographing are reused each time during photographing, so that the photographing speed is increased from four images per second to 30 images per second.

It should be noted that FIG. 5 shows comparison between a photographing speed obtained before frame reuse and a photographing speed obtained after the frame reuse in a non-high dynamic scenario. In addition, in FIG. 5, seven images in previous photographing are reused each time during photographing. However, in some other embodiments, a quantity of image frames reused each time during photographing may alternatively be 6, 5, 4, or even less. In this case, a photographing speed is lower than 30 images/s, but is still higher than 4 images/s. Usually, at least one image in previous photographing may be reused each time during photographing, to implement frame reuse and increase a photographing speed.

According to the frame reuse solution, the photographing speed can be increased without reducing a quantity of frames synthesized each time during photographing, and therefore without degrading quality of a photographing image. For example, in FIG. 5, before the frame reuse, eight images are fused each time during photographing; and after the frame reuse, eight images are still fused each time during photographing, without reducing a quantity of images fused each time during photographing.

Embodiments of this application provide two solutions for implementing frame reuse. In a first solution, after selecting a photographing frame for current photographing from a ZSL queue, an electronic device does not delete the photographing frame for the current photographing from the ZSL queue, but keeps the photographing frame for the current photographing stored in the ZSL queue, and waits for removal by a first in first out mechanism. In this way, during frame selection for next photographing, the electronic device may select, from the ZSL queue, a photographing frame for previous photographing, so that at least one image of photographing frames in two consecutive photographing operations is the same, to implement frame reuse.

In a second solution, after selecting a photographing frame for current photographing from a ZSL queue, an electronic device deletes the photographing frame for the current photographing from the ZSL queue, persistently stores the photographing frame for the current photographing in a storage medium, and stores metadata of the photographing frame for the current photographing in a historical frame queue. In this way, during frame selection for next photographing, the electronic device not only selects a photographing frame from the ZSL queue, but also selects a photographing frame for previous photographing from the historical frame queue based on metadata in the historical frame queue, to implement frame reuse.

The historical frame queue may be cache space for storing metadata of a photographing frame. A photographing frame corresponding to metadata stored in the historical frame queue may be obtained from the storage medium based on the metadata.

The following separately describes the two solutions for implementing frame reuse with reference to the accompanying drawings.

### First solution:

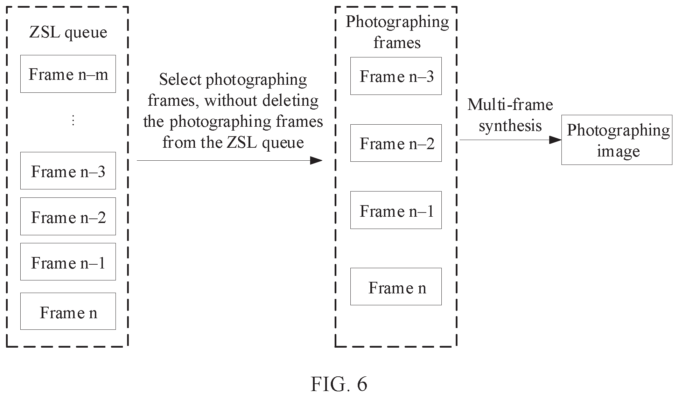

For example, FIG. 6 is a diagram of a solution for implementing frame reuse according to an embodiment of this application. A ZSL queue includes a plurality of image frames such as a frame n, a frame n-1, a frame n-2, a frame n-3, and a frame n-m. The frame n, the frame n-1, the frame n-2, and the frame n-3 are selected from the ZSL queue as photographing frames for current photographing. The frame n, the frame n-1, the frame n-2, and the frame n-3 are replicated, and then replicated images are used for photographing processing. After frames are selected for photographing, the frame n, the frame n-1, the frame n-2, and the frame n-3 are not deleted from the ZSL queue. In this case, image frames in the ZSL queue are deleted only upon normal rotation based on a first in first out mechanism.

In this way, after frames are selected for the current photographing, photographing frames for the current photographing are not deleted from the ZSL queue, so that the photographing frames for the current photographing can still be selected from the ZSL queue for next photographing, to implement frame reuse, and increase a photographing speed without degrading quality of a photographing image.

For example, during the current photographing, the frame n, the frame n-1, the frame n-2, and the frame n-3 are selected as photographing frames for the current photographing; and during the next photographing, assuming that the frame n, the frame n-1, the frame n-2, and the frame n-3 are not removed by the first in first out mechanism through rotation and are still stored in the ZSL queue, a frame n+1, the frame n, the frame n-1, and the frame n-2 may be selected as photographing frames. In this way, three frames of images, that is, the frame n, the frame n-1, and the frame n-2, are reused in the two consecutive photographing operations.

### Second solution:

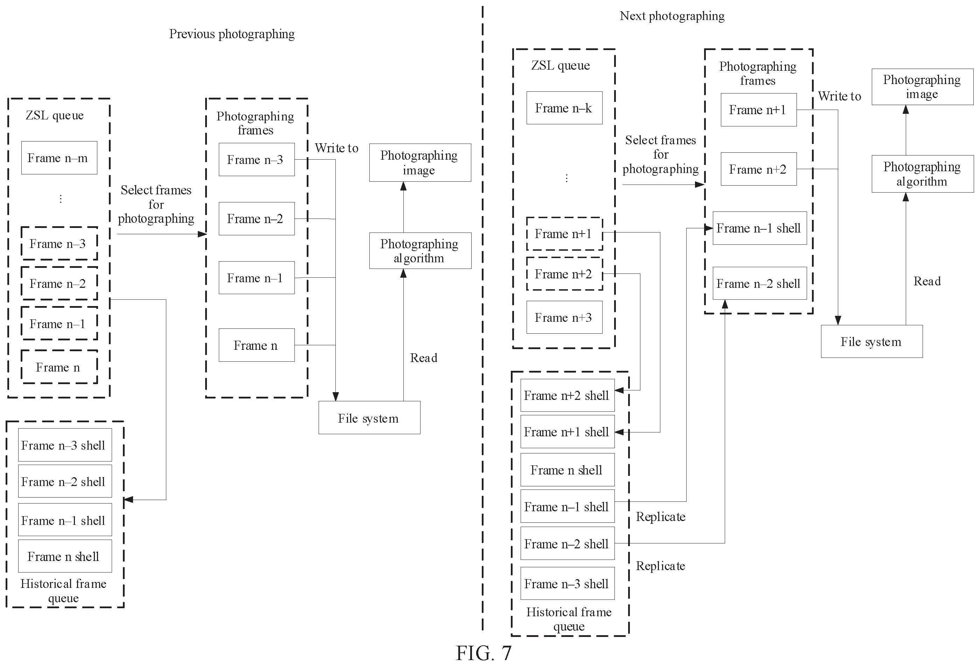

For example, FIG. 7 is a diagram of another solution for implementing frame reuse according to an embodiment of this application. FIG. 7 shows a process of previous photographing and a process of next photographing. In terms of timing, the previous photographing is performed before the next photographing. An image frame, metadata, and the like are cached in a ZSL queue.

During the previous photographing, a ZSL queue includes a plurality of image frames such as a frame n, a frame n-1, a frame n-2, a frame n-3, ..., and a frame n-m. The frame n, the frame n-1, the frame n-2, and the frame n-3 are selected from the ZSL queue as photographing frames for current photographing, and the frame n, the frame n-1, the frame n-2, and the frame n-3 are used for photographing processing. The frame n, the frame n-1, the frame n-2, and the frame n-3 are deleted from the ZSL queue, and the frame n, the frame n-1, the frame n-2, and the frame n-3 are written to a file system. That is, the photographing frames selected for the current photographing are deleted from the ZSL queue.

Being written to the file system means that the frame n, the frame n-1, the frame n-2, and the frame n-3 are persistently stored in a storage medium. The storage medium may be a hard disk drive or the like. After the photographing frames are persistently stored in the storage medium, the photographing frames may be subsequently read from the storage medium, and photographing algorithm processing is performed on the photographing frames to obtain a photographing image.

In addition, metadata of the frame n, metadata of the frame n-1, metadata of the frame n-2, and metadata of the frame n-3 (that is, the photographing frames) are further obtained from the ZSL queue, and the metadata of the frame n, the metadata of the frame n-1, the metadata of the frame n-2, and the metadata of the frame n-3 are stored in a historical frame queue as shells of the frames. A shell of a frame includes metadata (namely, metadata) of the frame, but does not include image content. The metadata of the frame may include, but is limited to, a frame number, an exposure parameter, and the like. The shell of the frame may be equivalent to the metadata of the frame. The metadata of the photographing frames may be stored in the historical frame queue for a long time.

As shown in FIG. 7, the metadata of the frame n is replicated from the ZSL queue, to generate a shell of the frame n, namely, a frame n shell, and the frame n shell is stored in the historical frame queue. The frame n shell does not include image content of the frame n, but includes the metadata of the frame n. Similarly, a frame n-1 shell, a frame n-2 shell, and a frame n-3 shell are generated based on the metadata of the frame n-1, the metadata of the frame n-2, and the metadata of the frame n-3 in the ZSL queue respectively, and the frame n-1 shell, the frame n-2 shell, and the frame n-3 shell are stored in the historical frame queue.

The frame n-1 shell includes the metadata of the frame n-1, but does not include image content of the frame n-1. The frame n-2 shell includes the metadata of the frame n-2, but does not include image content of the frame n-2. The frame n-3 shell includes the metadata of the frame n-3, but does not include image content of the frame n-3.

During the next photographing, a ZSL queue includes a plurality of image frames such as a frame n+3, a frame n+2, a frame n+1, ..., and a frame n-k, where n-k is greater than or equal to 1. In comparison with the previous photographing, new image frames such as the frame n+1, the frame n+2, and the frame n+3 are added to the ZSL queue based on normal rotation of a first in first out mechanism. A historical frame queue includes the frame n shell, the frame n-1 shell, the frame n-2 shell, and the frame n-3 shell.

Photographing frames for current photographing are selected from the ZSL queue and the historical frame queue. Specifically, the frame n+1 and the frame n+2 are selected from the ZSL queue as photographing frames, and the frame n+1 and the frame n+2 are written to the file system. The frame n+1 and the frame n+2 are deleted from the ZSL queue, metadata of the frame n+1 and metadata of the frame n+2 are obtained from the ZSL queue, a frame n+1 shell is generated based on the metadata of the frame n+1, and a frame n+2 shell is generated based on the metadata of the frame n+2. The frame n+1 shell and the frame n+2 shell are stored in the historical frame queue, to store the metadata of the frame n+1 and the metadata of the frame n+2 in the historical frame queue.

An image corresponding to the frame n-1 shell and an image corresponding to the frame -2 shell are selected from the historical frame queue as photographing frames, the frame n-1 shell and the frame -2 shell are replicated from the historical frame queue, and a replicated frame n-1 shell and a replicated frame -2 shell are used for subsequent photographing processing.

When photographing algorithm processing needs to be performed on the photographing frames, the frame n+1 and the frame n+2 may be read from the file system, the frame n-1 is found from the file system based on the frame n-1 shell, the frame n-2 is found from the file system based on the frame n-2 shell, and photographing algorithm processing is performed on the frame n-2, the frame n-1, the frame n+1, and the frame n+2 to obtain a photographing image for the current photographing.

It can be learned that image frames reused in the previous photographing and the next photographing include the frame n-2 and the frame n-1.

It should be noted that a photographing frame selected from the historical frame queue may not need to be written to the file system. Metadata selected from the historical frame queue is associated with current photographing, so that a corresponding image frame can be subsequently found from the file system based on the metadata. In this way, a reused image frame does not need to be repeatedly written to a disk, so that storage space is saved. For example, during the next photographing in FIG. 7, the frame n-1 corresponding to the frame n-1 shell and the frame n-2 corresponding to the frame n-2 shell are not written to the file system. A reason lies in that the frame n-1 and the frame n-2 are written to the file system in the previous photographing, and the frame n-1 and the frame n-2 are already stored in the file system.

It should be noted that, during the previous photographing in FIG. 7, the historical frame queue does not include metadata of a photographing frame for historical photographing, and therefore no photographing frame is selected from the historical frame queue. However, during actual application, if metadata of a photographing frame for historical photographing is stored in the historical frame queue, photographing frames need to be selected from the historical frame queue and the ZSL queue. In the case of frame selection for first photographing, the historical frame queue does not include metadata of a photographing frame for historical photographing. In this case, a photographing frame may be selected from the ZSL queue alone.

In addition, FIG. 6 and FIG. 7 show examples in which four image frames are selected as photographing frames each time during photographing. However, during actual application, a quantity of photographing frames selected each time during photographing may be determined according to an actual requirement. This is not limited herein.

It can be learned from the foregoing descriptions that, in the first solution, the photographing frames are not deleted from the ZSL queue, and the photographing frames are cached in the ZSL queue, to implement frame reuse. However, the photographing frames are not permanently cached in the ZSL queue. This is limited by a length of the ZSL queue. When the length of the ZSL queue reaches a maximum capacity and a new image frame needs to be added to the ZSL queue, an old image frame in the ZSL queue is removed. This affects a reuse rate of a photographing frame. The reuse rate of the photographing frame may be a quantity of times that the photographing frame is reused.

For example, in FIG. 6, the frame n is a photographing frame for first photographing. During second photographing, the frame n is still stored in the ZSL queue, and therefore the frame n may be selected as a photographing frame for the second photographing. During third photographing, the frame n has been removed by a first in first out normal rotation mechanism, and therefore the frame n cannot be selected as a photographing frame for the third photographing. In this case, the frame n is reused once.

However, in the second solution, the photographing frames are stored in the file system, and the metadata of the photographing frames is stored in the historical frame queue. The photographing frames may be permanently stored in the file system, without being limited by a length of the ZSL queue. The metadata of the photographing frames is not limited by a length of the historical frame queue either. This can save storage space while ensuring a frame reuse rate.

For example, in FIG. 7, the frame n is a photographing frame for first photographing. During second photographing and third photographing, the frame n is still stored in the file system, the metadata of the frame n is still stored in the historical frame queue, and the frame n may be selected as a photographing frame for the second photographing and the third photographing. In this case, the frame n is reused twice.

After determining a photographing frame, the electronic device may perform photographing algorithm processing on the photographing frame to obtain a photographing image. A photographing algorithm may enhance effect of image data output by camera hardware, to improve image effect and image quality.

For example, the photographing algorithm may include at least one of the following: a facial enhancement processing algorithm, a filter processing algorithm, a rotation processing algorithm, a watermark processing algorithm, a blurring processing algorithm, a high dynamic range (High Dynamic Range, HDR) imaging processing algorithm, a multi-frame processing algorithm, a noise reduction algorithm, a detail enhancement algorithm, and the like.

In some optional embodiments, the electronic device may continuously execute the photographing algorithm during photographing, to process a photographing frame and generate a photographing image.

When the electronic device is in a photographing process, a camera application runs in the foreground, and a preview image data stream further needs to be processed, to display a photographing preview interface on a photographing preview interface. For example, in the scenario shown in FIG. 1A to FIG. 1C, after starting the Camera application 11, the mobile phone 10 enters a photographing process. During photographing, the Camera application 11 runs in the foreground, and displays a photographing preview image on the photographing preview interface 12.

The inventors find during research that, when all photographing algorithms are continuously executed during photographing to obtain a photographing image in real time, photographing performance is degraded, affecting photographing experience of a user.

Specifically, during photographing, a large quantity of compute resources and memory resources need to be occupied to run the camera application in the foreground, process a preview video stream, execute a complex photographing algorithm, and the like. During photographing, processes of processing the preview video stream, running the camera application in the foreground, image rendering, and the like have occupied a large quantity of compute resources and memory resources. In this case, if all the photographing algorithms are still continuously executed during photographing, an amount of calculation during photographing is increased, and a quantity of compute resources and memory resources occupied during photographing is increased. This leads to excessively high processor load and excessively high running memory usage during photographing. In addition, the processes of running the camera application in the foreground, processing the preview video stream, and executing the complex photographing algorithm are simultaneously performed, and the processes contend for compute resources and memory resources, further increasing system pressure.

Excessively high processor load and running memory usage lead to a significant decrease in a photographing speed and frame freezing during photographing. In some scenarios (for example, a fast continuous capture scenario), a response failure even occurs during photographing, leading to low photographing performance. In addition, if a processor runs at high load for a long time during photographing, the device is subject to significant heating. Excessively high device temperature triggers a temperature control policy. The temperature control policy is intended to reduce temperature by limiting usage of the processor, for example, reducing a frequency and shortening usage time of a large core. The limitation measures on the processor lead to degradation of a processing capability of the processor, and further lead to degradation of photographing performance.

For example, in FIG. 6 and FIG. 1A to FIG. 1C, after receiving the tap operation of the user on the capture button 13, the mobile phone 10 selects the frame n, the frame n-1, the frame n-2, and the frame n-1 from the ZSL queue as photographing frames for current photographing, continuously processes a preview video stream, displays, on the photographing preview interface 12, a preview picture captured in real time, and continuously executes one or more photographing algorithms on the photographing frames to generate a photographing image. During this process, due to excessive high system pressure and load, the mobile phone 10 may be subject to problems such as heating of the device and degradation of photographing performance.

Particularly, in a continuous capture scenario, when the user continuously taps the capture button 13 for a plurality of times to perform a plurality of photographing operations, the mobile phone 10 needs to continuously execute one or more photographing algorithms on a photographing frame for each photographing operation. Processor load and running memory usage are excessively high, leading to related problems such as a decrease in a photographing speed.

In some other optional embodiments, after determining a photographing frame, the electronic device may not execute a photographing algorithm during photographing, or may execute only a part of photographing algorithms during photographing, to reduce an amount of calculation during photographing, and reduce processor load and running memory usage during photographing. This alleviates problems such as frame freezing and heating of the device, improves photographing performance, and improves photographing experience of a user.

A difference from the solution of continuously executing all photographing algorithms during photographing to obtain a photographing image in real time is as follows: In the staged photographing solution in this embodiment of this application, no photographing algorithm is executed during photographing; or only a part of photographing algorithms are executed during photographing, and execution of a remaining photographing algorithm is triggered on an appropriate occasion to obtain a photographing image. In this way, not all of photographing algorithms need to be continuously executed during photographing.

For example, the appropriate occasion may be: A user or an application needs to access image data; image data is viewed, shared, or edited; a system is idle; or a camera application is closed or is running in the background, and system status data (for example, processor load, a running memory, and device temperature) is lower than a preset value. That the user accesses the image data may be that the user taps a thumbnail of the electronic device on a photographing preview interface or in a gallery application.

For example, in FIG. 7, after the electronic device writes the selected photographing frame to the file system, if the electronic device is still in a photographing process, the electronic device may not execute a photographing algorithm on the photographing frames. Alternatively, the electronic device reads the photographing frames from the file system, executes only a part of photographing algorithms on the photographing frames, and writes an intermediate result of the part of photographing algorithms to the file system. On an appropriate occasion, the electronic device reads the photographing frames from the file system, and executes a photographing algorithm on the photographing frames to obtain a photographing image; or reads the intermediate result of the part of photographing algorithms from the file system, and continues to execute a remaining part of photographing algorithms to obtain a final photographing image.

According to the staged photographing solution, processor load and running memory usage during photographing can be reduced, to further increase a photographing speed. Specifically, in the case of single-stage photographing (to be specific, all photographing algorithms are continuously executed during photographing), a running memory keeps increasing with a quantity of captured images, until a system memory is exhausted or reaches a specified upper limit of usage and a system becomes slow. However, in the case of staged photographing, a photographing frame for each photographing operation is stored in the file system, and therefore a running memory of a system is not exhausted with a continuous increase in a quantity of captured images. This can effectively alleviate pressure of the running memory and improve photographing performance. That is, the staged photographing solution can well alleviate excessively high running memory usage during photographing, and further alleviate frame freezing of the device and the like.

In an HDR photographing scenario, an electronic device needs to capture one or more manual-exposure frames. The manual-exposure frame is used to increase a dynamic range of an image, and is an image obtained through exposure based on a manual-exposure parameter. The manual-exposure frame may also be referred to as a manual AE frame.

The manual-exposure parameter is an exposure parameter determined by a photographing system based on current environment information, and is not manually set by a user. The current environment information may include, for example, luminance information of a current environment.

For example, the manual-exposure frame includes a long-exposure image and a short-exposure image. In a photographing preview stage, the electronic device captures a normal-exposure image, and displays a preview picture based on the normal-exposure image. In addition, the electronic device further caches the normal-exposure image in a ZSL queue. After receiving a photographing operation, the electronic device needs to determine a manual-exposure parameter based on current environment information; control, based on the manual-exposure parameter, an image sensor to output a long-exposure image and a short-exposure image for current photographing; select the normal-exposure image from the ZSL queue; and then perform multi-frame fusion on the normal-exposure image, the long-exposure image, and the short-exposure image to obtain an HDR image.

In the related technology, an electronic device sets a manual-exposure parameter for current photographing only after receiving a photographing operation, and delivers the manual-exposure parameter for the current photographing to an image sensor, to indicate the image sensor to output a manual-exposure frame for the current photographing. However, there is a specific delay between time at which the manual-exposure parameter is set and time at which the manual-exposure parameter takes effect (to be specific, the image sensor outputs the manual-exposure frame). Each time during photographing, if a manual-exposure parameter is set and delivered only after a photographing operation is received, it takes specific time to wait for the image sensor to output a manual-exposure frame each time during photographing, reducing a photographing speed.

Based on the foregoing two solutions for implementing frame reuse, in this embodiment of this application, a manual-exposure frame may be reused, to increase a photographing speed in the HDR scenario.

In this case, after receiving a photographing operation, the electronic device may first determine whether a manual-exposure frame available for current photographing exists in a ZSL queue or in a ZSL queue and a historical frame queue. If a manual-exposure frame available for the current photographing exists, the electronic device does not need to set or deliver a manual-exposure parameter for the current photographing, but selects the available manual-exposure frame as a manual-exposure frame for the current photographing. If no manual-exposure frame available for the current photographing exists, the electronic device sets and delivers a manual-exposure parameter for the current photographing, and waits for the image sensor to output a manual-exposure frame. In this way, no manual-exposure parameter for the current photographing needs to be set or delivered when a manual-exposure frame available for the current photographing exists, and a manual-exposure parameter for the current photographing is set and delivered only when no manual-exposure frame available for the current photographing exists. This reduces a quantity of times of setting and delivering a manual-exposure parameter, reduces time taken to wait for the image sensor to output a manual-exposure frame, and increases a photographing speed. Especially in a continuous capture scenario, a manual-exposure parameter does not need to be set or delivered each time during photographing, so that a continuous capture speed is increased.

In an HDR multi-frame fusion scenario, there is a reference frame for each photographing operation. Optionally, the electronic device determines a quantity of frames between a reference frame for current photographing and a manual-exposure frame based on a frame number of the reference frame for the current photographing and a frame number of the manual-exposure frame. The quantity of frames being greater than a preset quantity indicates that image content of the manual-exposure frame greatly differs from image content of the reference frame. In this case, the electronic device determines that the manual-exposure frame is unavailable for the current photographing, in other words, no manual-exposure frame available for the current photographing exists. The quantity of frames being less than or equal to a preset quantity indicates that image content of the manual-exposure frame slightly differs from image content of the reference frame. In this case, the electronic device determines that the manual-exposure frame is available for the current photographing, in other words, a manual-exposure frame available for the current photographing exists. The preset quantity may be set according to an actual requirement. For example, the preset quantity is 7.

If the image content of the manual-exposure frame greatly differs from the image content of the reference frame, after the manual-exposure frame and the reference frame are fused, effect of a final photographing image is poor. In this embodiment of this application, whether a manual-exposure frame available for the current photographing exists is properly determined based on the quantity of frames between the reference frame for the current photographing and the manual-exposure frame, to implement reuse of the manual-exposure frame and increase a photographing speed while ensuring effect of a photographing image.

Alternatively, a time interval between a reference frame for current photographing and a manual-exposure frame may be determined based on a timestamp of the reference frame for the current photographing and a timestamp of the manual-exposure frame. The time interval between the reference frame for the current photographing and the manual-exposure frame being less than or equal to a preset threshold indicates that image content of the manual-exposure frame slightly differs from image content of the reference frame. In this case, it is determined that the manual-exposure frame is available for the current photographing. On the contrary, the time interval between the reference frame for the current photographing and the manual-exposure frame being greater than a preset threshold indicates that image content of the manual-exposure frame greatly differs from image content of the reference frame. In this case, it is determined that the manual-exposure frame is unavailable for the current photographing. The preset threshold may be set according to a requirement. This is not limited herein. In the HDR scenario, both a manual-exposure frame and a non-manual-exposure frame may be reused. In this case, during frame selection for photographing, a manual-exposure frame may be selected from a ZSL queue or from a ZSL queue and a historical frame queue, and a non-manual-exposure frame may also be selected. In addition, in the HDR scenario, a reference frame is usually not reused.

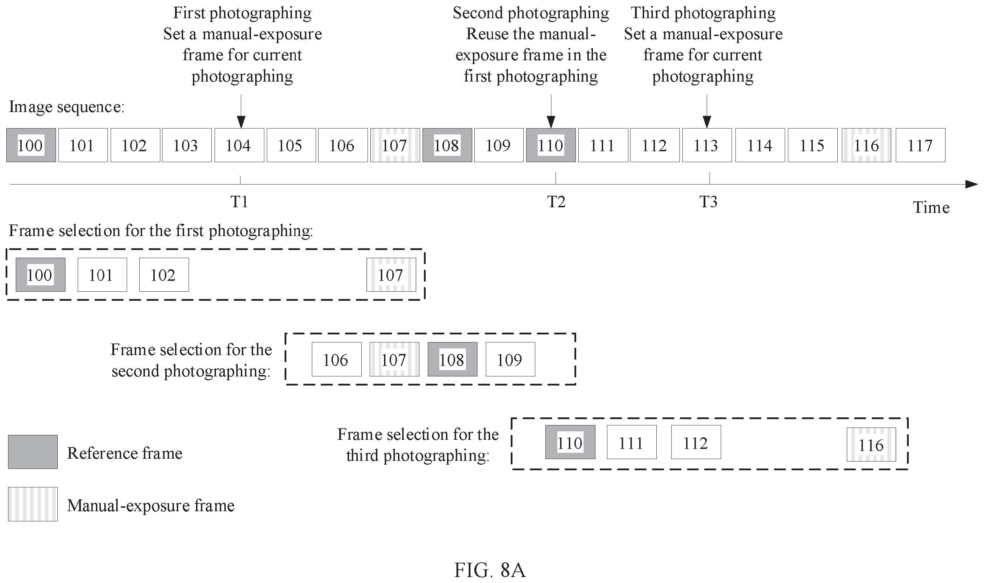

For example, FIG. 8A is a diagram of reusing a manual-exposure frame according to an embodiment of this application. An image sequence includes a total of 18 image frames: a frame 100 to a frame 117. In chronological order, the frame 100 is the earliest, and the frame 117 is the latest. The image sequence may be image frames sequentially captured by an image sensor within a period of time.

Before a moment T1, an electronic device is in a photographing preview stage, and continuously caches an image frame in a ZSL queue. As shown in FIG. 8A, the frame 100, the frame 101, the frame 102, and the frame 103 are captured before the moment T1.

At the moment T1, the electronic device receives a trigger operation (for example, tapping a capture button) of a user for first photographing. In response to the trigger operation, the electronic device starts frame selection for the first photographing. Specifically, the frame 100, the frame 101, and the frame 102 are selected as photographing frames for the first photographing. The frame 100 is a reference frame for the first photographing.

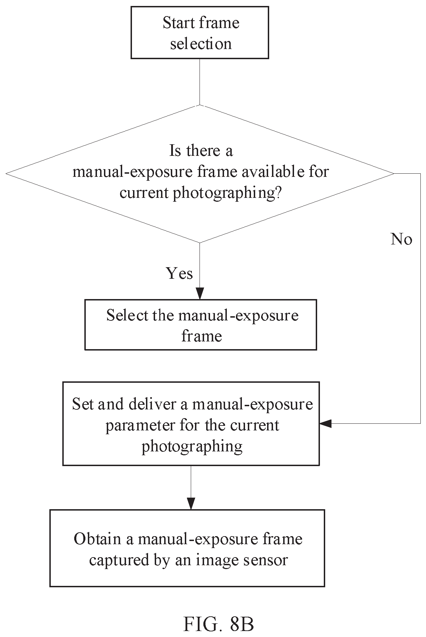

In addition, during frame selection for the first photographing, a manual-exposure frame further needs to be obtained. Specifically, FIG. 8B is a block diagram of a process of obtaining a manual-exposure frame according to an embodiment of this application. When frame selection starts, whether a manual-exposure frame available for current photographing exists is determined. If yes, the available manual-exposure frame is selected as a manual-exposure frame for the current photographing. If no, a manual-exposure parameter for the current photographing is set and delivered, and waiting is performed for a manual-exposure frame captured by an image sensor based on the manual-exposure parameter. In FIG. 8A, if it is determined, according to the process in FIG. 8B, that no manual-exposure frame available for the first photographing exists, a manual-exposure parameter for the first photographing is set and delivered. After the manual-exposure parameter is delivered to the image sensor, the image sensor outputs the frame 107 based on the manual-exposure parameter. After the image sensor outputs the frame 107, the frame 107 is selected as a manual-exposure frame for the first photographing. As shown in FIG. 8A, during frame selection for the first photographing, selected photographing frames include the frame 100, the frame 101, the frame 102, and the frame 107.

It can be learned from FIG. 8A that the electronic device sets and delivers the manual-exposure parameter at the frame 104. However, because it takes time for the manual-exposure parameter to take effect, the image sensor outputs the manual-exposure frame based on the manual-exposure parameter at the frame 107. That is, if a manual-exposure parameter is set and delivered after a photographing operation is received, because it takes time for the manual-exposure parameter to take effect, a photographing speed is affected.

At the moment T1 to a moment T2, the electronic device is in the photographing preview stage, and continuously caches an image frame in the ZSL queue.

At the moment T2, the electronic device receives a trigger operation (for example, tapping the capture button) of the user for second photographing. In response to the trigger operation, the electronic device starts frame selection for the second photographing. Specifically, the frame 106, the frame 107, the frame 108, and the frame 109 are selected as photographing frames for the second photographing, where the frame 108 is a reference frame for the second photographing, and the frame 107 is reused as a manual-exposure frame for the second photographing.

During frame selection for the second photographing, the electronic device determines, according to the process shown in FIG. 8B, that the frame 107 is available for current photographing, and therefore reuses the manual-exposure frame used in the first photographing, without a need to set or deliver a manual-exposure parameter for the current photographing.

It can be learned from FIG. 8A that, during frame selection for the second photographing, because a manual-exposure frame for previous photographing may be reused, the electronic device does not need to set or deliver a manual-exposure parameter, and does not need to wait for a manual-exposure parameter to take effect, and therefore can quickly select a photographing frame for current photographing.

At the moment T2 to a moment T3, the electronic device is in the photographing preview stage, and continuously caches an image frame in the ZSL queue.

At the moment T3, the electronic device receives a trigger operation (for example, tapping the capture button) of the user for third photographing. In response to the trigger operation, the electronic device starts frame selection for the third photographing. Specifically, the frame 110, the frame 111, the frame 112, and the frame 116 are selected as photographing frames for the third photographing, where the frame 110 is a reference frame for the third photographing, and the frame 117 serves as a manual-exposure frame for the third photographing.

During frame selection for the third photographing, the electronic device determines, according to the process shown in FIG. 8B, that the frame 107 is unavailable for current photographing, and therefore sets and delivers a manual-exposure parameter for the current photographing, and waits for the image sensor to output an image frame based on the manual-exposure parameter. In this case, the image sensor outputs the frame 116 based on the manual-exposure parameter.

It should be noted that, in the scenario in FIG. 8A and FIG. 8B, the foregoing first solution or second solution may be used to implement frame reuse. When the first solution is used, a frame is selected from a ZSL queue during frame selection for photographing. When the second solution is used, frames are selected from a ZSL queue and a historical frame queue during frame selection for photographing.

According to the foregoing embodiments, after it is determined that a manual-exposure frame available for current photographing exists, whether the manual-exposure frame available for the current photographing is available for next photographing may be further predicted. If the manual-exposure frame for the current photographing is available for the next photographing, no manual-exposure frame needs to be set for the next photographing in advance. If the manual-exposure frame for the current photographing is unavailable for the next photographing, a manual-exposure frame is set for the next photographing in advance.

In this case, after receiving a photographing operation, the electronic device may first determine whether a manual-exposure frame available for current photographing exists in a ZSL queue or in a ZSL queue and a historical frame queue. If a manual-exposure frame available for the current photographing exists, the electronic device selects the available manual-exposure frame as a manual-exposure frame for the current photographing; and further predicts whether the manual-exposure frame available for the current photographing is available for next photographing, and determines, based on a prediction result, whether to set a manual-exposure frame for the next photographing in advance. If no manual-exposure frame available for the current photographing exists, the electronic device sets and delivers a manual-exposure parameter for the current photographing, and waits for the image sensor to output a manual-exposure frame.

As described above, in the related technology, an electronic device sets a manual-exposure parameter for current photographing only after receiving a photographing operation, and delivers the manual-exposure parameter for the current photographing to an image sensor, to indicate the image sensor to output a manual-exposure frame for the current photographing. However, there is a specific delay between time at which the manual-exposure parameter is set and time at which the manual-exposure parameter takes effect (to be specific, the image sensor outputs the manual-exposure frame). Each time during photographing, if a manual-exposure parameter is set and delivered for current photographing only after a photographing operation is received, it takes specific time to wait for the image sensor to output a manual-exposure frame each time during photographing, reducing a photographing speed.

In this embodiment of this application, after a photographing operation is received, a manual-exposure parameter for next photographing is set and delivered in advance, to mask time taken for the manual-exposure parameter to take effect, and increase an HDR photographing speed.

Specifically, after receiving a first photographing operation, the electronic device first sets and delivers a manual-exposure parameter for current photographing, and then sets and delivers a manual-exposure parameter for next photographing. The image sensor outputs a manual-exposure parameter for the current photographing based on the manual-exposure parameter for the current photographing; and then outputs a manual-exposure frame for the next photographing based on the manual-exposure parameter for the next photographing, and caches the manual-exposure frame for the next photographing.

After receiving a second photographing operation, because a manual-exposure parameter for second photographing is set and delivered in advance during first photographing, the electronic device may obtain a prestored manual-exposure frame for the second photographing from a cache, without a need to set or deliver a manual-exposure parameter for current photographing. In addition, the electronic device further sets and delivers a manual-exposure parameter for next photographing in advance, to indicate the image sensor to output a manual-exposure frame for the next photographing based on the manual-exposure parameter for the next photographing, and caches the manual-exposure frame for the next photographing. The second photographing operation is performed after the first photographing operation, the first photographing is photographing corresponding to the first photographing operation, and the second photographing is photographing corresponding to the second photographing operation.

After receiving a third photographing operation, because a manual-exposure parameter for third photographing is set and delivered in advance during the second photographing, the electronic device may obtain a manual-exposure frame for current photographing from the cache. In addition, the electronic device further sets and delivers a manual-exposure parameter for next photographing in advance, to indicate the image sensor to output a manual-exposure frame for the next photographing based on the manual-exposure parameter for the next photographing, and caches the manual-exposure frame for the next photographing. The third photographing operation is performed after the second photographing operation.

By analogy, each time after receiving a photographing operation, the electronic device sets and delivers a manual-exposure parameter for next photographing in advance, to indicate the image sensor to output a manual-exposure frame for the next photographing, and stores the manual-exposure frame for the next photographing. When receiving a next photographing operation, the electronic device may obtain a prestored manual-exposure frame.

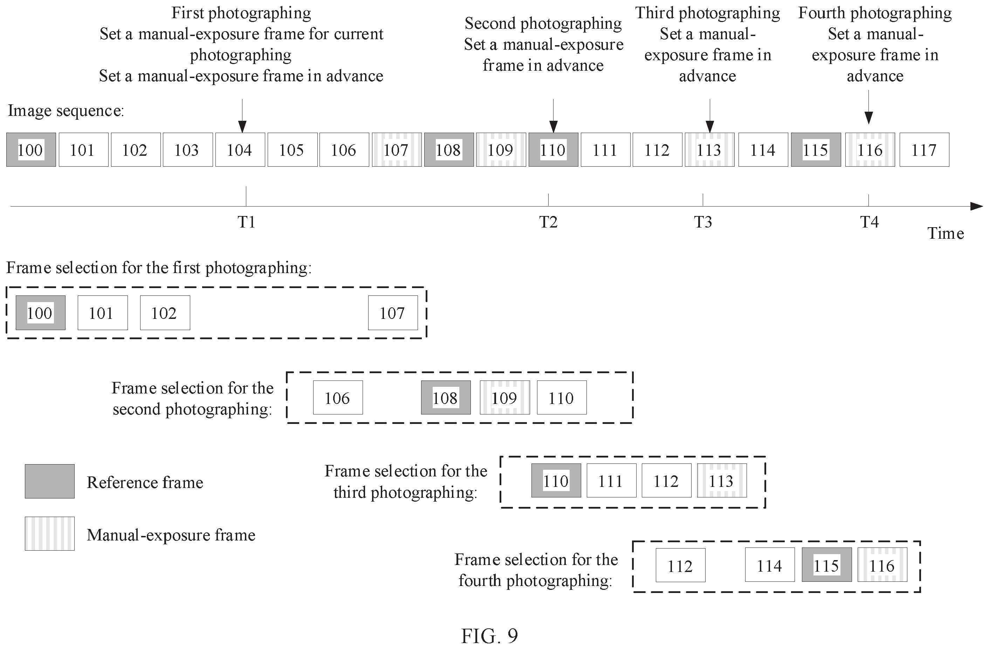

For example, FIG. 9 is a diagram of setting a manual-exposure frame in advance according to an embodiment of this application. An image sequence includes a frame 100 to a frame 117. In chronological order, the frame 100 is the earliest, and the frame 117 is the latest. The image sequence may be image frames sequentially captured by an image sensor within a period of time.

At a moment T1, an electronic device receives a trigger operation (for example, tapping a capture button) of a user for first photographing. In response to the trigger operation, the electronic device starts frame selection for the first photographing. Specifically, the frame 100, the frame 101, the frame 102, and the frame 107 are selected as photographing frames for the first photographing. The frame 100 is a reference frame for the first photographing, and the frame 107 is a manual-exposure frame for the first photographing.

After receiving the trigger operation for the first photographing, the electronic device sets a manual-exposure frame for current photographing, and further sets a manual-exposure frame for next photographing in advance. Specifically, the electronic device first delivers a manual-exposure parameter for the current photographing to the image sensor, and then delivers a manual-exposure parameter for the next photographing to the image sensor. As shown in FIG. 9, the image sensor outputs the frame 107 based on the manual-exposure parameter for the current photographing, outputs the frame 109 based on the manual-exposure parameter for the next photographing, and caches the frame 109.

At a moment T2, the electronic device receives a trigger operation (for example, tapping the capture button) of the user for second photographing. In response to the trigger operation, the electronic device starts frame selection for the second photographing. Specifically, the frame 106, the frame 108, the frame 109, and the frame 110 are selected as photographing frames for the second photographing, where the frame 108 is a reference frame for the second photographing, and the frame 109 serves as a manual-exposure frame for the second photographing. In addition, the electronic device further sets and delivers a manual-exposure parameter for next photographing in advance, to indicate the image sensor to output the frame 113 based on the manual-exposure parameter for the next photographing, and caches the frame 113.

The frame 109 is set in advance and pre-cached during the first photographing. Therefore, during frame selection for the second photographing, the frame 109 may be directly obtained from cache space as a manual-exposure frame for current photographing, without a need to set or deliver a manual-exposure parameter for the current photographing.

At a moment T3, the electronic device receives a trigger operation (for example, tapping the capture button) of the user for third photographing. In response to the trigger operation, the electronic device starts frame selection for the third photographing. Specifically, the frame 110, the frame 111, the frame 112, and the frame 113 are selected as photographing frames for the third photographing, where the frame 110 is a reference frame for the third photographing, and the frame 113 serves as a manual-exposure frame for the third photographing. In addition, the electronic device further sets and delivers a manual-exposure parameter for next photographing in advance, to indicate the image sensor to output the frame 116 based on the manual-exposure parameter for the next photographing, and caches the frame 116.

The frame 113 is set in advance and pre-cached during the second photographing. Therefore, during frame selection for the third photographing, the frame 113 may be directly obtained from the cache space as a manual-exposure frame for current photographing, without a need to set or deliver a manual-exposure parameter for the current photographing.

At a moment T4, the electronic device receives a trigger operation (for example, tapping the capture button) of the user for fourth photographing. In response to the trigger operation, the electronic device starts frame selection for the fourth photographing. Specifically, the frame 112, the frame 114, the frame 115, and the frame 116 are selected as photographing frames for the fourth photographing, where the frame 115 is a reference frame for the fourth photographing, and the frame 116 serves as a manual-exposure frame for the fourth photographing. In addition, the electronic device further sets and delivers a manual-exposure parameter for next photographing in advance, to indicate the image sensor to output a manual-exposure frame for the next photographing based on the manual-exposure parameter for the next photographing, and caches the manual-exposure frame for the next photographing.

The frame 116 is set in advance and pre-cached during the third photographing. Therefore, during frame selection for the fourth photographing, the frame 116 may be directly obtained from the cache space as a manual-exposure frame for current photographing, without a need to set or deliver a manual-exposure parameter for the current photographing.

It can be learned from FIG. 9 that, except for the first photographing in which the electronic device needs to wait for a manual-exposure frame for current photographing to take effect, time taken for manual-exposure frames for the second photographing, the third photographing, and the fourth photographing to take effect is masked by setting and delivering a manual-exposure parameter for next photographing in advance, to increase an HDR photographing speed.

Embodiments of this application may further provide a photographing processing solution in which a frame is reused and a manual-exposure frame is set in advance, to increase a photographing speed without degrading quality of a photographing image.

Specifically, before setting a manual-exposure frame for next photographing in advance, an electronic device first predicts whether a manual-exposure frame used in current photographing is available for the next photographing. If the manual-exposure frame used in the current photographing is unavailable for the next photographing, the electronic device sets a manual-exposure frame for the next photographing in advance. If the manual-exposure frame used in the current photographing is available for the next photographing, the electronic device does not need to set a manual-exposure frame for the next photographing in advance, but reuses the manual-exposure frame used in the current photographing during the next photographing. In this way, the electronic device does not need to set a manual-exposure frame for next photographing in advance each time during photographing, but sets a manual-exposure frame for next photographing in advance only after predicting that a manual-exposure frame used in current photographing is unavailable for the next photographing. This reduces a quantity of times of setting and delivering a manual-exposure frame, and further increases a photographing speed.

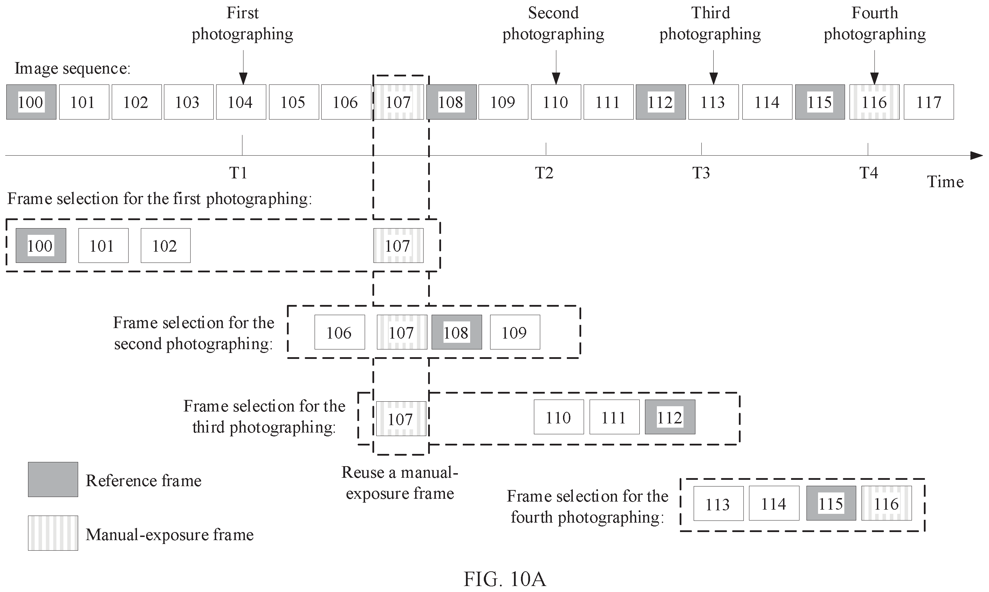

For example, FIG. 10A is a diagram of reusing a manual-exposure frame and setting a manual-exposure frame in advance according to an embodiment of this application. An image sequence includes a frame 100 to a frame 117. In chronological order, the frame 100 is the earliest, and the frame 117 is the latest. The image sequence may be image frames sequentially captured by an image sensor within a period of time.

Before a moment T1, an electronic device is in a photographing preview stage, and continuously caches an image frame in a ZSL queue. As shown in FIG. 8A, the frame 100, the frame 101, the frame 102, and the frame 103 are captured before the moment T1.

At the moment T1, the electronic device receives a trigger operation (for example, tapping a capture button) of a user for first photographing. In response to the trigger operation, the electronic device starts frame selection for the first photographing. Specifically, the frame 100, the frame 101, the frame 102, and the frame 107 are selected as photographing frames for the first photographing. The frame 100 is a reference frame for the first photographing, and the frame 107 is a manual-exposure frame for the first photographing.

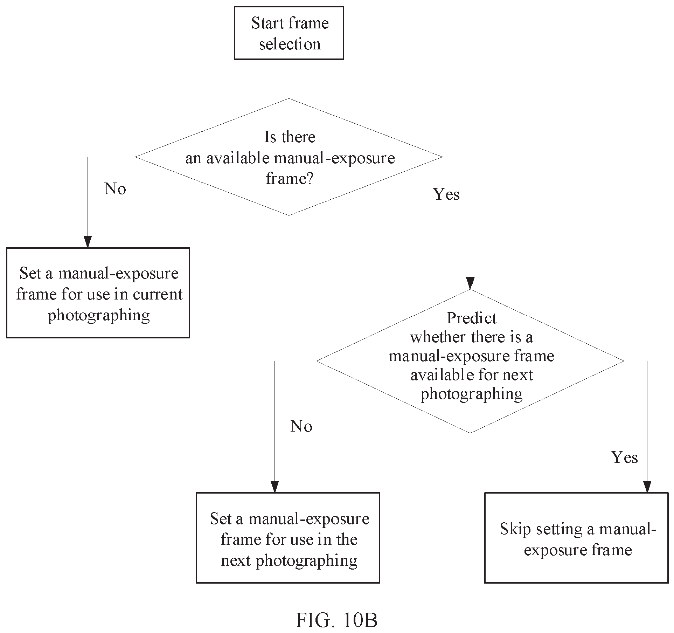

FIG. 10B is a block diagram of a process of obtaining a manual-exposure frame according to an embodiment of this application. Each time during frame selection for photographing, whether a manual-exposure frame is currently available is first determined. If no, a manual-exposure frame is set for use in current photographing. If yes, whether a manual-exposure frame is available for next photographing is further predicted. If no manual-exposure frame is available for the next photographing, a manual-exposure frame is set for the next photographing in advance. If a manual-exposure frame is available for the next photographing, no manual-exposure frame is set.

During frame selection for the first photographing, it is determined, according to the process shown in FIG. 10B, that no manual-exposure frame is available for current photographing, and therefore a manual-exposure frame is set for use in the current photographing. Specifically, a manual-exposure parameter for the first photographing is delivered to the image sensor, and the image sensor outputs the frame 107 based on the manual-exposure parameter for the first photographing.

At the moment T1 to a moment T2, the electronic device is in the photographing preview stage, and continuously caches an image frame in the ZSL queue.

At the moment T2, the electronic device receives a trigger operation (for example, tapping the capture button) of the user for second photographing. In response to the trigger operation, the electronic device starts frame selection for the second photographing. Specifically, the frame 106, the frame 107, the frame 108, and the frame 109 are selected as photographing frames for the second photographing, where the frame 108 is a reference frame for the second photographing, and the frame 107 is reused as a manual-exposure frame for the second photographing.

During frame selection for the second photographing, the electronic device determines, according to the process shown in FIG. 8B, that the frame 107 is available for current photographing, in other words, a manual-exposure frame available for the current photographing exists, and therefore reuses the manual-exposure frame used in the first photographing. In addition, the electronic device further predicts whether a manual-exposure frame available for next photographing exists, in other words, predicts whether the frame 107 is available for the next photographing. In this case, the electronic device predicts that the frame 107 is available for the next photographing, in other words, a manual-exposure frame available for the next photographing exists, and therefore does not set a manual-exposure frame for the next photographing in advance.

Setting a manual-exposure frame for the next photographing may be: delivering a manual-exposure parameter to the image sensor, to indicate the image sensor to output a manual-exposure frame for the next photographing based on the manual-exposure parameter.

At the moment T2 to a moment T3, the electronic device is in the photographing preview stage, and continuously caches an image frame in the ZSL queue.

At the moment T3, the electronic device receives a trigger operation (for example, tapping the capture button) of the user for third photographing. In response to the trigger operation, the electronic device starts frame selection for the third photographing. Specifically, the frame 107, the frame 110, the frame 111, and the frame 112 are selected as photographing frames for the third photographing, where the frame 112 is a reference frame for the third photographing, and the frame 107 is reused as a manual-exposure frame for the third photographing.

During frame selection for the third photographing, the electronic device determines, according to the process shown in FIG. 8B, that the frame 107 is available for current photographing, and therefore reuses the manual-exposure frame used in the first photographing. In addition, the electronic device further predicts whether a manual-exposure frame available for next photographing exists, in other words, predicts whether the frame 107 is available for the next photographing. In this case, the electronic device predicts that the frame 107 is unavailable for the next photographing, in other words, no manual-exposure frame available for the next photographing exists, and therefore sets a manual-exposure frame for the next photographing in advance. Specifically, a manual-exposure parameter for fourth photographing is delivered to the image sensor, the image sensor outputs the frame 116 based on the manual-exposure parameter for the fourth photographing, and the frame 116 is cached.

At a moment T4, the electronic device receives a trigger operation (for example, tapping the capture button) of the user for the fourth photographing. In response to the trigger operation, the electronic device starts frame selection for the fourth photographing. Specifically, the frame 113, the frame 114, the frame 115, and the frame 116 are selected as photographing frames for the fourth photographing, where the frame 115 is a reference frame for the fourth photographing, and the frame 116 is a manual-exposure frame for the fourth photographing.

During frame selection for the fourth photographing, the electronic device determines, according to the process shown in FIG. 8B, that the frame 116 is available for current photographing, and therefore selects the frame 116 as a manual-exposure frame for the current photographing. In addition, the electronic device further predicts whether a manual-exposure frame available for next photographing exists, in other words, predicts whether the frame 116 is available for the next photographing. If the frame 116 is unavailable, a manual-exposure frame is set for the next photographing in advance. If the frame 116 is available, no manual-exposure frame is set.

Optionally, when determining whether a manual-exposure frame available for current photographing exists, the electronic device may determine a quantity of frames between a reference frame for the current photographing and a manual-exposure frame based on a frame number of the reference frame for the current photographing and a frame number of the manual-exposure frame. The quantity of frames being greater than a preset quantity indicates that image content of the manual-exposure frame greatly differs from image content of the reference frame. In this case, the electronic device determines that the manual-exposure frame is unavailable for the current photographing, in other words, no manual-exposure frame available for the current photographing exists. The quantity of frames being less than or equal to a preset quantity indicates that image content of the manual-exposure frame slightly differs from image content of the reference frame. In this case, the electronic device determines that the manual-exposure frame is available for the current photographing, in other words, a manual-exposure frame available for the current photographing exists. The preset quantity may be set according to an actual requirement. For example, the preset quantity is 7.

If the image content of the manual-exposure frame greatly differs from the image content of the reference frame, after the manual-exposure frame and the reference frame are fused, effect of a final photographing image is poor. In this embodiment of this application, whether a manual-exposure frame available for the current photographing exists is properly determined based on the quantity of frames between the reference frame for the current photographing and the manual-exposure frame, to implement reuse of the manual-exposure frame and increase a photographing speed while ensuring effect of a photographing image.

Optionally, when predicting whether a manual-exposure frame available for next photographing exists, to be specific, determining whether a manual-exposure frame used in current photographing is available for the next photographing, the electronic device may predict time of the next photographing based on photographing time of the current photographing and a photographing interval. If a time interval between the time of the next photographing or a timestamp of a reference frame for the next photographing and a timestamp of the manual-exposure frame for the current photographing is greater than a preset time threshold, the electronic device determines that the manual-exposure frame for the current photographing is unavailable for the next photographing. If a time interval between the time of the next photographing or a timestamp of a reference frame for the next photographing and a timestamp of the manual-exposure frame for the current photographing is less than or equal to a preset time threshold, the electronic device determines that the manual-exposure frame for the current photographing is available for the next photographing, in other words, no manual-exposure frame available for the next photographing exists.

The preset time threshold may be set according to an actual requirement.

The photographing interval may be a predicted value. Optionally, a shortest photographing interval is determined based on photographing intervals between a preset quantity of times of previous photographing, and the shortest photographing interval is determined as the photographing interval. For example, the photographing interval is 300 ms.

It should be noted that, in the scenario in FIG. 10A and FIG. 10B, the foregoing first solution or second solution may be used to implement frame reuse. When the first solution is used, a frame is selected from a ZSL queue during frame selection for photographing. When the second solution is used, frames are selected from a ZSL queue and a historical frame queue during frame selection for photographing.

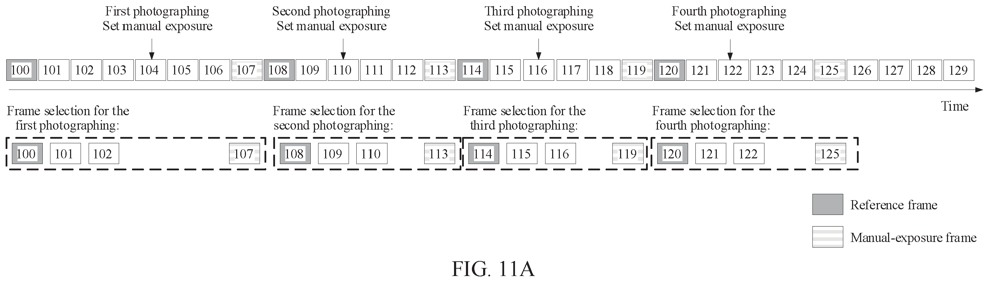

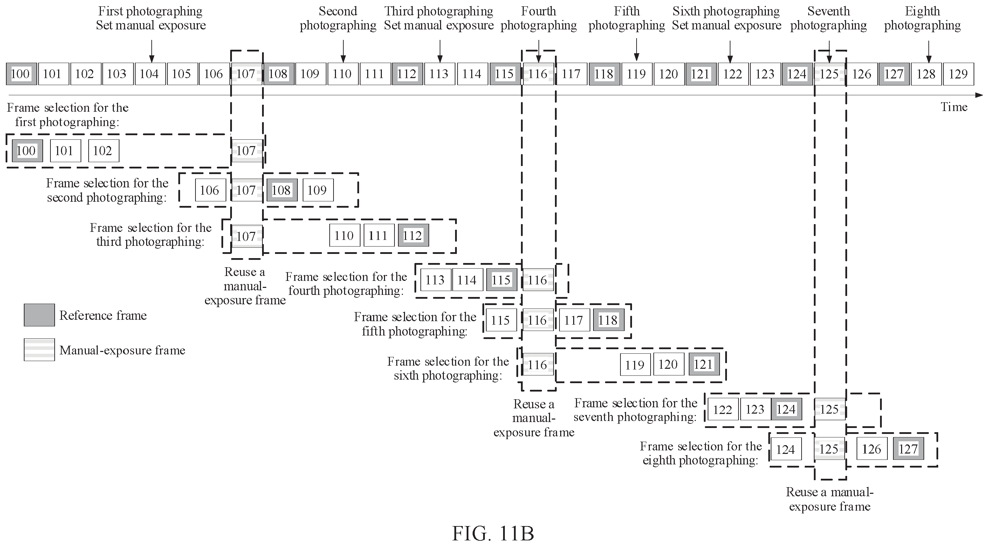

With reference to a diagram of a photographing speed according to an embodiment of this application shown in FIG. 11A and a diagram of a photographing speed according to this application shown in FIG. 11B, the following describes a photographing speed obtained before a frame is reused and a manual-exposure frame is set in advance and a photographing speed obtained after a frame is reused and a manual-exposure frame is set in advance.

FIG. 11A shows a photographing speed obtained when no manual-exposure frame is reused and no manual-exposure frame is set in advance. FIG. 11B shows a photographing speed obtained when a manual-exposure frame is reused and a manual-exposure frame is set in advance.

A scenario in FIG. 11A and FIG. 11B is an HDR photographing scenario in which an image sensor outputs an image in a staggered manner. In addition, four images are selected for fusion each time during photographing, and the four images include two normal-exposure images, one short-exposure image, and one long-exposure image. The image sensor outputs frames at 30 fps.

As shown in FIG. 11A, the image sensor outputs 30 frames of images within one second: a frame 100 to a frame 129.

After receiving a trigger operation for first photographing, an electronic device delivers a manual-exposure parameter for current photographing to the image sensor. The image sensor outputs the frame 107 based on the manual-exposure parameter. During frame selection for the first photographing, the frame 100, the frame 101, the frame 102, and the frame 107 are selected as photographing frames for the first photographing. The frame 100 is a reference frame for the first photographing, and the frame 107 is a manual-exposure frame for the first photographing.

After receiving a trigger operation for second photographing, the electronic device delivers a manual-exposure parameter for current photographing to the image sensor. The image sensor outputs the frame 113 based on the manual-exposure parameter. During frame selection for the second photographing, the frame 108, the frame 109, the frame 110, and the frame 113 are selected as photographing frames for the second photographing. The frame 108 is a reference frame for the second photographing, and the frame 113 is a manual-exposure frame for the second photographing.

After receiving a trigger operation for third photographing, the electronic device delivers a manual-exposure parameter for current photographing to the image sensor. The image sensor outputs the frame 119 based on the manual-exposure parameter. During frame selection for the third photographing, the frame 114, the frame 115, the frame 116, and the frame 119 are selected as photographing frames for the third photographing. The frame 114 is a reference frame for the third photographing, and the frame 119 is a manual-exposure frame for the third photographing.

After receiving a trigger operation for fourth photographing, the electronic device delivers a manual-exposure parameter for current photographing to the image sensor. The image sensor outputs the frame 125 based on the manual-exposure parameter. During frame selection for the fourth photographing, the frame 120, the frame 121, the frame 122, and the frame 125 are selected as photographing frames for the third photographing. The frame 120 is a reference frame for the fourth photographing, and the frame 125 is a manual-exposure frame for the fourth photographing.

As shown in FIG. 11B, the image sensor outputs 30 frames of images within one second: a frame 100 to a frame 129.

After receiving a trigger operation for first photographing, an electronic device determines that no manual-exposure frame available for current photographing exists, and therefore delivers a manual-exposure parameter for the current photographing to the image sensor. The image sensor outputs the frame 107 based on the manual-exposure parameter. During frame selection for the first photographing, the frame 100, the frame 101, the frame 102, and the frame 107 are selected as photographing frames for the first photographing. The frame 100 is a reference frame for the first photographing, and the frame 107 is a manual-exposure frame for the first photographing.

After receiving a trigger operation for second photographing, the electronic device determines that the manual-exposure frame for the first photographing is available for the second photographing, in other words, a manual-exposure frame available for current photographing exists, and therefore reuses the frame 107 as a manual-exposure frame for the current photographing. During frame selection for the second photographing, the frame 106, the frame 107, the frame 108, and the frame 109 are selected as photographing frames for the second photographing. The frame 108 is a reference frame for the second photographing, and the frame 107 is reused as a manual-exposure frame for the second photographing.

In addition, the electronic device predicts that the frame 107 is available for next photographing, in other words, a manual-exposure frame available for the next photographing exists, and therefore does not set a manual-exposure frame for the next photographing in advance.

After receiving a trigger operation for third photographing, the electronic device determines that the manual-exposure frame for the first photographing is available for current photographing, in other words, a manual-exposure frame available for the current photographing exists, and therefore reuses the frame 107 as a manual-exposure frame for the current photographing. During frame selection for the third photographing, the frame 107, the frame 110, the frame 111, and the frame 112 are selected as photographing frames for the third photographing. The frame 112 is a reference frame for the third photographing, and the frame 107 is reused as a manual-exposure frame for the second photographing.

In addition, the electronic device predicts that the frame 107 is unavailable for next photographing, in other words, no manual-exposure frame available for the next photographing exists, and therefore sets a manual-exposure frame for the next photographing in advance. Specifically, a manual-exposure parameter for the next photographing is delivered to the image sensor, the image sensor outputs the frame 116 based on the manual-exposure parameter, and the frame 116 is stored.

After receiving a trigger operation for fourth photographing, the electronic device determines that the manual-exposure frame that is set in the third photographing is available for current photographing, in other words, a manual-exposure frame available for the current photographing exists, and therefore selects the frame 116 as a manual-exposure frame for the current photographing. During frame selection for the fourth photographing, the frame 113, the frame 114, the frame 115, and the frame 116 are selected as photographing frames for the fourth photographing. The frame 115 is a reference frame for the fourth photographing.

In addition, the electronic device predicts that the frame 116 is unavailable for next photographing, in other words, no manual-exposure frame available for the next photographing exists, and therefore does not set a manual-exposure frame for the next photographing in advance.

After receiving a trigger operation for fifth photographing, the electronic device determines that the manual-exposure frame for the fourth photographing is available this time, in other words, a manual-exposure frame available for current photographing exists, and therefore reuses the frame 116 as a manual-exposure frame for the current photographing. During frame selection for the fifth photographing, the frame 115, the frame 116, the frame 117, and the frame 118 are selected as photographing frames for the fifth photographing. The frame 118 is a reference frame for the fifth photographing.

In addition, the electronic device predicts that the frame 116 is available for next photographing, in other words, a manual-exposure frame available for the next photographing exists, and therefore does not set a manual-exposure frame for the next photographing in advance.

After receiving a trigger operation for sixth photographing, the electronic device determines that the manual-exposure frame for the fifth photographing is available for current photographing, in other words, a manual-exposure frame available for the current photographing exists, and therefore reuses the frame 116 as a manual-exposure frame for the current photographing. During frame selection for the sixth photographing, the frame 116, the frame 119, the frame 120, and the frame 121 are selected as photographing frames for the sixth photographing. The frame 121 is a reference frame for the sixth photographing.

In addition, the electronic device predicts that the frame 116 is unavailable for next photographing, in other words, no manual-exposure frame available for the next photographing exists, and therefore sets a manual-exposure frame for the next photographing in advance. Specifically, a manual-exposure parameter for the next photographing is delivered to the image sensor, the image sensor outputs the frame 125 based on the manual-exposure parameter, and the frame 125 is stored.

After receiving a trigger operation for seventh photographing, the electronic device determines that the manual-exposure frame that is set in the sixth photographing is available for current photographing, in other words, a manual-exposure frame available for the current photographing exists, and therefore selects the frame 125 as a manual-exposure frame for the current photographing. During frame selection for the seventh photographing, the frame 122, the frame 123, the frame 124, and the frame 125 are selected as photographing frames for the seventh photographing. The frame 114 is a reference frame for the seventh photographing.

In addition, the electronic device predicts that the frame 125 is unavailable for next photographing, in other words, no manual-exposure frame available for the next photographing exists, and therefore does not set a manual-exposure frame for the next photographing in advance.

After receiving a trigger operation for eighth photographing, the electronic device determines that the manual-exposure frame for the eighth photographing is available this time, in other words, a manual-exposure frame available for current photographing exists, and therefore reuses the frame 125 as a manual-exposure frame for the current photographing. During frame selection for the eighth photographing, the frame 124, the frame 125, the frame 126, and the frame 127 are selected as photographing frames for the eighth photographing. The frame 127 is a reference frame for the fifth photographing.

It can be learned through comparison between FIG. 11A and FIG. 11B that, before a frame is reused and a manual-exposure frame is set in advance, a maximum of four images may be captured within one second, in other words, a photographing speed is four images per second; and after a frame is reused and a manual-exposure frame is set in advance, a maximum of eight images may be captured within one second, in other words, a photographing speed is eight images per second. An HDR photographing speed is increased without compromising quality of a photographing image.

The photographing processing solution provided in embodiments of this application may be applied to an electronic device. The electronic device may be, for example, a mobile phone or a tablet computer. A type of the electronic device is not limited herein.

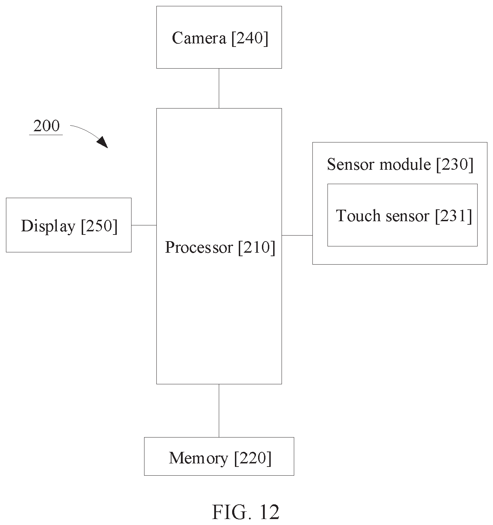

For example, FIG. 12 is a diagram of a structure of an electronic device 200. The electronic device 200 may include, but is not limited to, a processor 210, a memory 220, a sensor module 230, a camera 240, a display 250, and the like. The sensor module 230 may include, but is not limited to, a touch sensor 231.

It can be understood that the structure shown in this embodiment of this application does not constitute a specific limitation on the electronic device 200. In some other embodiments of this application, the electronic device 200 may include more or fewer components than those shown in the figure, or some components may be combined, or some components may be split, or the components may be arranged differently. The components shown in the figure may be implemented by hardware, software, or a combination of software and hardware. For example, when the electronic device 200 is a mobile phone, the electronic device 200 may further include a universal serial bus (universal serial bus, USB) interface, a charging management module, a power management module, a battery, an antenna, a mobile communication module, a wireless communication module, an audio module, a speaker, a receiver, a microphone, a headset jack, a button, a motor, an indicator, a subscriber identity module (subscriber identity module, SIM) card interface, a pressure sensor, a gyroscope sensor, a barometric pressure sensor, a magnetic sensor, an acceleration sensor, a distance sensor, an optical proximity sensor, a fingerprint sensor, an ambient light sensor, and a bone conduction sensor.

The processor 210 may include one or more processing units. For example, the processor 210 may include an application processor (application processor, AP), a graphics processing unit (graphics processing unit, GPU), an image signal processor, a controller, a video codec, a digital signal processor (digital signal processor, DSP), and/or a neural-network processing unit (neural-network processing unit, NPU). Different processing units may be independent components, or may be integrated into one or more processors.

The controller may generate an operation control signal based on an instruction operation code and a timing signal, to control instruction fetching and instruction execution.

In some embodiments, the processor 210 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a two-way synchronous serial bus, and includes a serial data line (serial data line, SDA) and a serial clock line (serial clock line, SCL). In some embodiments, the processor 210 may include a plurality of groups of I2C buses. The processor 210 may be coupled to the touch sensor 231, the camera 240, and the like through different I2C bus interfaces. For example, the processor 210 may be coupled to the touch sensor 231 through the I2C interface, so that the processor 210 communicates with the touch sensor 231 through the I2C bus interface, to implement a touch function of the electronic device 200.

The MIPI interface may be configured to connect the processor 210 to a peripheral component, for example, the display 250 or the camera 240. The MIPI interface includes a camera serial interface (camera serial interface, CSI), a display serial interface (display serial interface, DSI), and the like. In some embodiments, the processor 210 communicates with the camera 240 through the CSI interface, to implement an image shooting function of the electronic device 200. The processor 210 communicates with the display 250 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the camera 240, the display 250, the sensor module 230, and the like. The GPIO interface may alternatively be configured as an I2C interface, an MIPI interface, or the like.

It can be understood that an interface connection relationship between the modules shown in this embodiment of this application is merely an example for description, and does not constitute a limitation on the structure of the electronic device 200. In some other embodiments of this application, the electronic device 200 may alternatively use an interface connection mode different from that in the foregoing embodiment, or use a combination of a plurality of interface connection modes.

The electronic device 200 implements a display function through the GPU, the display 250, the application processor, and the like. The GPU is a microprocessor for image processing, and is connected to the display 250 and the application processor. The GPU is configured to perform mathematical and geometric computation for graphics rendering. The processor 210 may include one or more GPUs that execute program instructions to generate or change displayed information.

The display 250 is configured to display an image, a video, or the like. The display 250 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 250, where N is a positive integer greater than 1.

The electronic device 200 may implement an image shooting function through the ISP, the camera 240, the video codec, the GPU, the display 250, the application processor, and the like.

The ISP is configured to process data fed back by the camera 240. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and color temperature of an image shooting scene. In some embodiments, the ISP may be disposed in the camera 240.

The camera 240 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 200 may include one or N cameras 240, where N is a positive integer greater than 1.

The digital signal processor is configured to process a digital image signal.

The video codec is configured to compress or decompress a digital video. The electronic device 200 may support one or more types of video codecs. In this way, the electronic device 200 can play or record videos in a plurality of coding formats, for example, moving picture experts group (moving picture experts group, MPEG)-1, MPEG-2, MPEG-3, and MPEG-4.

The memory 220 may be configured to store computer-executable program code. The executable program code includes instructions. The memory 220 may include a program storage area and a data storage area. The program storage area may store an operating system, an application for at least one function (for example, a sound play function or an image play function), and the like. The data storage area may store data (for example, audio data and an address book) created during use of the electronic device 200, and the like. In addition, the memory 220 may include a high-speed random access memory, or may include a non-volatile memory, for example, at least one magnetic disk storage device, a flash memory, or a universal flash storage (universal flash storage, UFS). The processor 210 runs instructions stored in the internal memory 220 and/or instructions stored in the memory disposed in the processor, to perform various function applications and data processing of the electronic device 200.

The touch sensor 231 is also referred to as a "touch device". The touch sensor 231 may be disposed in the display 250. The touch sensor 231 and the display 250 constitute a touchscreen, also referred to as a "touch screen". The touch sensor 231 is configured to detect a touch operation performed on or near the touch sensor. The touch sensor may transmit the detected touch operation to the application processor to determine a type of a touch event. The display 250 may provide a visual output related to the touch operation.

After a possible hardware architecture of the electronic device 200 in embodiments of this application is described, the following uses the electronic device 200 as an example for description of subsequent content.

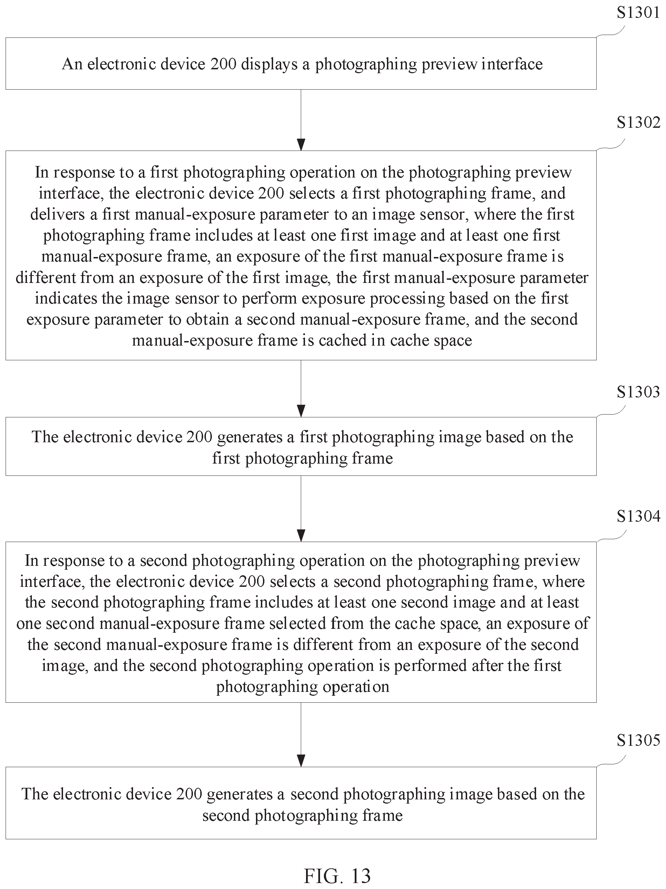

FIG. 13 is a block diagram of a process of a photographing processing method according to an embodiment of this application. The photographing processing method may include the following steps.

Step S1301: The electronic device 200 displays a photographing preview interface.

Step S1302: In response to a first photographing operation on the photographing preview interface, the electronic device 200 selects a first photographing frame, and delivers a first manual-exposure parameter to an image sensor, where the first photographing frame includes at least one first image and at least one first manual-exposure frame, an exposure of the first manual-exposure frame is different from an exposure of the first image, the first manual-exposure parameter indicates the image sensor to perform exposure processing based on the first manual-exposure parameter to obtain a second manual-exposure frame, and the second manual-exposure frame is cached in cache space.

For example, based on the photographing scenario shown in FIG. 1A to FIG. 1C, the first photographing operation may be an operation of tapping the capture button 13 by the user. Certainly, the first photographing operation may alternatively be a speech input operation performed by the user on the photographing preview interface 12. The first photographing operation is used to trigger photographing.

A degree of exposure of the first manual-exposure frame is different from a degree of exposure of the first image. For example, the first image is a normal-exposure image, and the first manual-exposure frame includes a long-exposure image and a short-exposure image.

The first manual-exposure parameter is used to set a manual-exposure frame for next photographing. To be specific, after receiving the first photographing operation, the electronic device 200 not only selects a photographing frame corresponding to the first photographing operation, but also sets a manual-exposure frame for the next photographing in advance. The second manual-exposure frame is the manual-exposure frame for the next photographing.

In some optional embodiments, the electronic device 200 enters a photographing preview stage when displaying the photographing preview interface. In the photographing preview stage, a photographing preview image is generated, and an image frame (for example, a raw image) corresponding to the photographing preview image is further cached in a ZSL queue. In this case, after receiving the first photographing frame, the electronic device 200 may select the first photographing frame from the ZSL queue, or may select the first photographing frame from the ZSL queue and a historical frame queue. The second manual-exposure frame may be cached in the ZSL queue. The first manual-exposure frame and the first image may be cached in the ZSL queue or other storage space.

The cache space may be a ZSL queue or other storage space. This is not limited herein.

The first manual-exposure frame may be obtained by reusing a manual-exposure frame used in previous photographing, or may be a manual-exposure frame obtained by setting and delivering a manual-exposure parameter for current photographing after the first photographing operation is received.

Step S1303: The electronic device 200 generates a first photographing image based on the first photographing frame.

For example, the electronic device 200 may perform photographing algorithm processing on the first photographing frame to obtain the first photographing image.

Optionally, when selecting the first photographing frame, the electronic device 200 may not immediately perform all photographing algorithm processing on the first photographing frame during photographing, but may first persistently store the first photographing frame (for example, store the first photographing frame in a file system), and then wait for an appropriate occasion to read the first photographing frame from a storage medium and perform remaining photographing algorithm processing to obtain the first photographing image. This can reduce an amount of calculation during photographing, to reduce a probability that the electronic device is subject to frame freezing due to excessively high load and system pressure, and further increase a photographing speed.

For example, the appropriate occasion may be: The electronic device 200 exits a photographing process, for example, exits and closes a camera application, or runs a camera application in the background; the electronic device 200 is in an idle state, for example, a screen is off; or an image is viewed, shared, or edited.

Step S1304: In response to a second photographing operation on the photographing preview interface, the electronic device 200 selects a second photographing frame, where the second photographing frame includes at least one second image and at least one second manual-exposure frame selected from the cache space, an exposure of the second manual-exposure frame is different from an exposure of the second image, and the second photographing operation is performed after the first photographing operation.

For example, the second image is a normal-exposure image, and the second manual-exposure frame includes a long-exposure image and a short-exposure image. The electronic device 200 may select the at least one second image from the ZSL queue or from the ZSL queue and the historical frame queue.

The second photographing operation is used to trigger photographing. For example, the second photographing operation is an operation of tapping the capture button 13 by the user, or a speech input operation performed by the user on the photographing preview interface 12.

After receiving the second photographing operation, because the manual-exposure frame for the next photographing is set in advance during the first photographing operation, the electronic device 200 may directly obtain the second manual-exposure frame from the cache space as a manual-exposure frame for current photographing, without a need to set a manual-exposure frame for the current photographing. This masks time for the manual-exposure frame to take effect, and increases a photographing speed.

Step S1305: The electronic device 200 generates a second photographing image based on the second photographing frame.

Optionally, when selecting the second photographing frame, the electronic device 200 may not immediately perform all photographing algorithm processing on the second photographing frame during photographing, but waits for an appropriate occasion to read the first photographing frame from the storage medium and perform remaining photographing algorithm processing to obtain the first photographing image.

It can be learned from the foregoing descriptions that, in this embodiment of this application, after a photographing operation is received, a manual-exposure parameter is set and delivered for next photographing in advance, in other words, a manual-exposure frame is set for the next photographing in advance, to mask time taken for the manual-exposure parameter to take effect, and increase a photographing speed.

In some optional embodiments, the electronic device 200 may set a manual-exposure frame for next photographing in advance each time during photographing.

Certainly, in some other optional embodiments, the electronic device 200 may alternatively determine whether a manual-exposure frame for current photographing is available for next photographing, to determine whether to set a manual-exposure frame for the next photographing.

Specifically, before delivering the first manual-exposure parameter to the image sensor, the electronic device 200 may further determine whether the first manual-exposure frame is available for the next photographing. If the first manual-exposure frame is unavailable for the next photographing, the electronic device 200 delivers the first manual-exposure parameter to the image sensor, to indicate the image sensor to output, based on the first manual-exposure parameter, a manual-exposure frame (namely, the second manual-exposure frame) needed for the next photographing.

If the first manual-exposure frame is unavailable for the next photographing, the electronic device 200 does not set a manual-exposure frame for the next photographing, in other words, does not deliver the first manual-exposure parameter. In this case, after receiving the second photographing operation, the electronic device 200 may select the first manual-exposure frame and the at least one second image as the second photographing frame in response to the second photographing operation, that is, reuse a manual-exposure frame used in previous photographing.

In this embodiment of this application, the electronic device 200 first determines whether the first manual-exposure frame used in current photographing is available for the next photographing, and then determines whether to set a manual-exposure frame for the next photographing. In this way, a same manual-exposure frame may be reused in two photographing operations, to implement reuse of the manual-exposure frame. In addition, a quantity of times of delivering a manual-exposure parameter can be further reduced, to further increase a photographing speed. In some optional embodiments, in a process of determining whether the first manual-exposure frame is available for the next photographing, the electronic device 200 may predict time of the next photographing based on photographing time of the first photographing operation and a photographing interval; and if a time interval between the time of the next photographing or a timestamp of a reference frame for the next photographing and a timestamp of the first manual-exposure frame is greater than a preset time threshold, determine that the first manual-exposure frame is unavailable for the next photographing; or if a time interval between the time of the next photographing or a timestamp of a reference frame for the next photographing and a timestamp of the first manual-exposure frame is less than or equal to a preset time threshold, determine that the first manual-exposure frame is available for the next photographing. This can implement frame reuse of the manual-exposure frame and increase a photographing speed while ensuring photographing effect. The preset time threshold may be set according to an actual requirement. This is not limited herein.

In some optional embodiments, in response to the second photographing operation, the electronic device 200 may deliver a second manual-exposure parameter to the image sensor, to indicate the image sensor to perform exposure processing based on the second manual-exposure parameter to obtain a third manual-exposure frame, where the third manual-exposure frame is cached in the cache space. The third manual-exposure frame is a manual-exposure frame for next photographing. In other words, a manual-exposure frame is set for the next photographing in advance.

Alternatively, in response to the second photographing operation, if determining that the second manual-exposure frame is unavailable for next photographing, the electronic device 200 may deliver a second manual-exposure parameter to the image sensor, to indicate the image sensor to perform exposure processing based on the second manual-exposure parameter to obtain a third manual-exposure frame, where the third manual-exposure frame is cached in the cache space. If the second manual-exposure frame is available for the next photographing, the electronic device 200 does not deliver the second manual-exposure parameter to the image sensor.

In some optional embodiments, a part of first images and a part of second images are same images. This can implement frame reuse and increase a photographing speed. For example, as shown in FIG. 7, a part of first images may be a frame n-1 in previous photographing, and a part of second images may be a frame n-1 in next photographing. In addition, another part of first images may be a frame n and a frame n-3 in the previous photographing, and another part of second images may be a frame n+1 and a frame n+2 in the next photographing. The first manual-exposure frame and the second manual-exposure frame are a frame n-2. In this way, both the frame n-2 (that is, a manual-exposure frame) and the frame n-1 (a non-manual-exposure frame) are reused in the two consecutive photographing operations.

In some optional embodiments, when displaying the photographing preview interface, the electronic device 200 may further cache, in the cache space, an image that is captured by the image sensor and that corresponds to the photographing preview interface. In this case, the first image is an image cached in the cache space before the first photographing operation, the first manual-exposure frame is an image cached in the cache space before the first photographing operation or the second photographing operation, and the second image is an image cached in the cache space before the second photographing operation. For example, the cache space is a ZSL queue, and an image corresponding to a photographing preview image is cached in the ZSL queue.

In some optional embodiments, the first photographing frame includes a cached image in the cache space, or includes a cached image in the cache space and a historical cached image, where the historical cached image is an image that is cached in the cache space before the first photographing operation but is not cached in the cache space and is persistently stored in the storage medium during the first photographing operation, and the second image is a cached image in the cache space, or an image that is cached in the cache space before the second photographing operation but is not cached in the cache space and is persistently stored in the storage medium during the second photographing operation.

For example, the cache space may be a ZSL queue, and the storage medium may be a hard disk drive. The historical cached image may be the photographing frame written to the file system in the foregoing descriptions.

In some optional embodiments, in a process of selecting the first photographing frame, if a target cached image exists in the cache space or first target information exists in historical frame storage space, the electronic device 200 selects the target cached image or an image corresponding to the first target information as the first manual-exposure frame, where the historical frame storage space is used to store information about a photographing frame selected for historical photographing, the photographing frame selected for the historical photographing is persistently stored in the storage medium, and the target cached image and the image corresponding to the first target information are manual-exposure frames available for the current photographing; selects the at least one first image from the historical frame storage space and/or the cache space; and for an image selected from the cache space, deletes the selected image from the cache space, persistently stores the selected image in the storage medium, and stores information about the selected image in the historical storage space, where the selected image includes the first manual-exposure frame and/or the first image.

For example, the historical frame storage space may be the historical frame queue in the foregoing descriptions. The information about the photographing frame may be metadata of the photographing frame. The cache space may be a ZSL queue. The target cached image or the image corresponding to the first target information is a manual-exposure frame available for the current photographing. Whether a manual-exposure frame available for the current photographing exists may be determined based on a quantity of frames between a reference frame and a manual-exposure frame. For example, when an image at an interval within seven frames from a reference frame for the current photographing exists in the cache space or the historical frame storage space, the image is the target cached image, or information corresponding to the image is the first target information.

In some optional embodiments, if determining that the target cached image does not exist in the cache space and the first target information does not exist in the historical frame storage space, the electronic device 200 delivers a fourth manual-exposure parameter to the image sensor, to indicate the image sensor to perform exposure processing based on the fourth manual-exposure parameter to obtain a manual-exposure frame, and selects the manual-exposure frame as the first manual-exposure frame. That is, when no reusable manual-exposure frame exists, the electronic device 200 may deliver a manual-exposure parameter for current photographing after receiving a current photographing operation, to obtain a manual-exposure frame needed for the current photographing.

In some optional embodiments, a quantity of frames between the manual-exposure frame available for the current photographing and a reference frame for the first photographing operation is less than a preset quantity. For example, the preset quantity is 7. Alternatively, a time interval between a timestamp of the manual-exposure frame available for the current photographing and a timestamp of a reference frame for the first photographing operation is less than a preset threshold.

In some optional embodiments, in a process of selecting the second photographing frame, the electronic device 200 may select the second manual-exposure frame from the cache space, delete the second manual-exposure frame from the cache space, persistently store the second manual-exposure frame in the storage medium, and store information about the second manual-exposure frame in the historical storage space; and select the second image from the cache space, delete the second image from the cache space, persistently store the second image in the storage medium, and store information about the second image in the historical storage space; and/or select second target information from the historical storage space, where an image corresponding to the second target information is the second image.

In some optional embodiments, in a process of selecting the first photographing frame, if determining that a target cached image exists in the cache space, the electronic device 200 selects the target cached image as the first manual-exposure frame, where the target cached image is a manual-exposure frame available for the current photographing; selects the at least one first image from the cache space; and keeps the first manual-exposure frame and the first image cached in the cache space, and waits for removal by a storage mechanism of the cache space. The storage medium may be a first in first out mechanism of a ZSL queue.

Correspondingly, in a process of selecting the second photographing frame, the electronic device 200 may select the second manual-exposure frame and the second image from the cache space, keep the second manual-exposure frame and the second image cached in the cache space, and wait for removal by the storage mechanism of the cache space.

In some optional embodiments, in a process of generating the first photographing image based on the first photographing frame, if an operation of viewing a thumbnail is detected, or the camera application is running in the background or closed, or the camera application is running in the background or closed and a preset trigger condition is detected, the electronic device 200 obtains the first photographing frame from the storage medium, and performs photographing algorithm processing on the first photographing frame to obtain the first photographing image.

Correspondingly, in a process of generating the second photographing image based on the second photographing frame, if an operation of viewing a thumbnail is detected, or the camera application is running in the background or closed, or the camera application is running in the background or closed and a preset trigger condition is detected, the electronic device 200 obtains the second photographing frame from the storage medium, and performs photographing algorithm processing on the second photographing frame to obtain the second photographing image.

In some optional embodiments, the preset trigger condition includes at least one of the following: an operation of starting an image access application, an operation of viewing an image, an operation of sharing an image, an operation of editing an image, a system being in an idle state, a screen being off, a running memory being higher than a first threshold, device temperature being lower than a first temperature threshold, or processor load being lower than a second threshold.

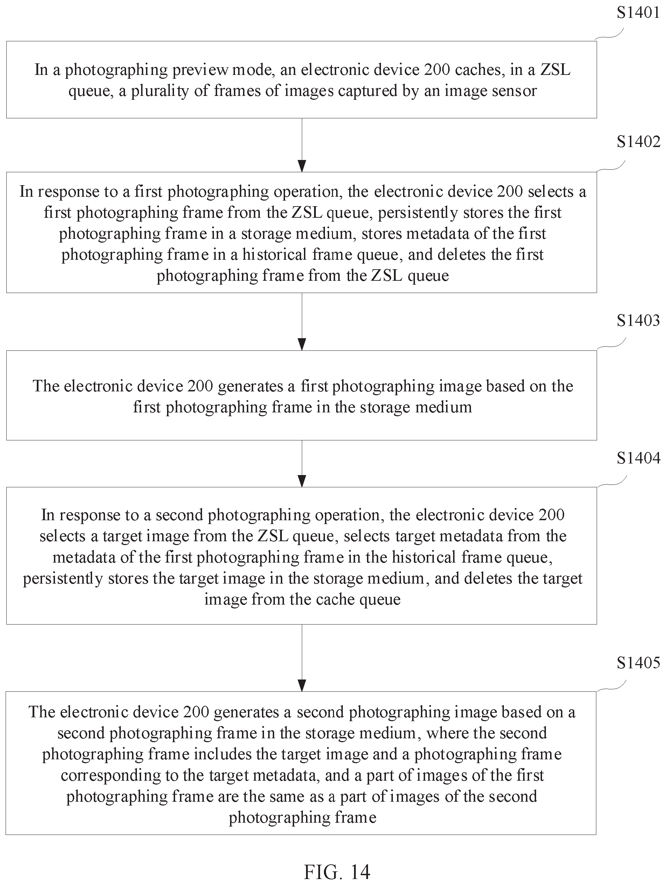

FIG. 14 is a block diagram of a process of a photographing processing method according to an embodiment of this application. The photographing processing method may include the following steps.

Step S1401: In a photographing preview mode, the electronic device 200 caches, in a ZSL queue, a plurality of frames of images captured by an image sensor.

Step S1402: In response to a first photographing operation, the electronic device 200 selects a first photographing frame from the ZSL queue, persistently stores the first photographing frame in a storage medium, stores metadata of the first photographing frame in a historical frame queue, and deletes the first photographing frame from the ZSL queue.

Step S1403: The electronic device 200 generates a first photographing image based on the first photographing frame in the storage medium.

Step S1404: In response to a second photographing operation, the electronic device 200 selects a target image from the ZSL queue, selects target metadata from the metadata of the first photographing frame in the historical frame queue, persistently stores the target image in the storage medium, and deletes the target image from the cache queue.

Step S1405: The electronic device 200 generates a second photographing image based on a second photographing frame in the storage medium, where the second photographing frame includes the target image and a photographing frame corresponding to the target metadata. A part of images of the first photographing frame are the same as a part of images of the second photographing frame.

It can be learned from the foregoing descriptions that, in this embodiment of this application, frame reuse of the photographing frame is implemented by using the historical frame queue and the storage medium. This can not only increase a photographing speed, but also avoid a limitation imposed by a length of the ZSL queue, to save memory while ensuring a frame reuse rate.

In some optional embodiments, in a process of generating the first photographing image based on the first photographing frame, if an operation of viewing a thumbnail is detected, or a camera application is running in the background or closed, or a camera application is running in the background or closed and a preset trigger condition is detected, the electronic device 200 obtains the first photographing frame from the storage medium, and performs photographing algorithm processing on the first photographing frame to obtain the first photographing image.

Correspondingly, in a process of generating the second photographing image based on the second photographing frame, if an operation of viewing a thumbnail is detected, or the camera application is running in the background or closed, or the camera application is running in the background or closed and a preset trigger condition is detected, the electronic device 200 obtains the second photographing frame from the storage medium, and performs photographing algorithm processing on the second photographing frame to obtain the second photographing image.

In some optional embodiments, the preset trigger condition includes at least one of the following: an operation of starting an image access application, an operation of viewing an image, an operation of sharing an image, an operation of editing an image, a system being in an idle state, a screen being off, a running memory being higher than a first threshold, device temperature being lower than a first temperature threshold, or processor load being lower than a second threshold. In this way, when a user needs to view, edit, share, or perform another operation on image data, photographing algorithm processing can be performed in a timely manner, to enable the user to view a photographing image in a timely manner. In addition, when a system status meets a condition, to be specific, the running memory, the device temperature, the processor load, and the like meet requirements, photographing algorithm processing may be automatically triggered, to further alleviate problems such as frame freezing and heating of the device.

In some optional embodiments, after receiving the first photographing operation, the electronic device 200 may not only select the first photographing frame, but also set a manual-exposure parameter, deliver the manual-exposure parameter to the image sensor, to indicate the image sensor to output, based on the manual-exposure parameter, a manual-exposure frame to be used in next photographing, and cache the manual-exposure frame in the ZSL queue. In this way, after receiving a next photographing operation, namely, the second photographing operation, the electronic device may select, from the ZSL queue, a manual-exposure frame available for current photographing and an image with another exposure (for example, a normal-exposure image), without a need to set a manual-exposure parameter for the current photographing after receiving the second photographing operation, or wait for a manual-exposure parameter for the current photographing to take effect. This masks a period between time at which the manual-exposure parameter is set and time at which the manual-exposure parameter takes effect, to further increase an HDR photographing speed.

In some optional embodiments, each time during photographing, the electronic device 200 may set a manual-exposure parameter and deliver the manual-exposure parameter for next photographing in advance.

In some optional embodiments, after selecting a frame for photographing and before setting and delivering a manual-exposure parameter for next photographing, the electronic device 200 may further determine whether a manual-exposure frame used in current photographing is available for the next photographing. If the manual-exposure frame used in the current photographing is available for the next photographing, the electronic device 200 does not need to set or deliver a manual-exposure parameter for the next photographing in advance, and may reuse the manual-exposure frame used in the current photographing during the next photographing, that is, implement reuse of the manual-exposure frame. If the manual-exposure frame used in the current photographing is unavailable for the next photographing, the electronic device 200 sets and delivers a manual-exposure parameter for the next photographing in advance.

In some optional embodiments, in a process of selecting a frame for photographing, the electronic device 200 may first determine whether a manual-exposure frame available for current photographing exists in the ZSL queue and/or the historical frame queue, that is, determine whether there is a reusable manual-exposure frame. If there is a reusable manual-exposure frame, the electronic device 200 selects the manual-exposure frame as a manual-exposure frame to be used in the current photographing, and after selecting a photographing frame for the current photographing, further predicts whether the manual-exposure frame to be used in the current photographing is available for next photographing. If no manual-exposure frame available for the current photographing exists in the ZSL queue or the historical frame queue, the electronic device 200 needs to set and deliver a manual-exposure parameter, to indicate the image sensor to output a manual-exposure frame based on the manual-exposure parameter, and cache the manual-exposure frame in the ZSL queue; and after the image sensor outputs the manual-exposure frame, selects the manual-exposure frame and another image from the ZSL queue, to obtain a photographing frame for the current photographing.

In some optional embodiments, in a process of determining whether the manual-exposure frame used in the current photographing is available for the next photographing, the electronic device 200 may predict time of the next photographing based on photographing time of a current photographing operation and a photographing interval; and if a time interval between the time of the next photographing or a timestamp of a reference frame for the next photographing and a timestamp of the manual-exposure frame used in the current photographing is greater than a preset time threshold, determine that the manual-exposure frame used in the current photographing is unavailable for the next photographing; or if a time interval between the time of the next photographing or a timestamp of a reference frame for the next photographing and a timestamp of the manual-exposure frame used in the current photographing is less than or equal to a preset time threshold, determine that the manual-exposure frame used in the current photographing is available for the next photographing.

In some optional embodiments, when determining whether a manual-exposure frame available for the current photographing exists in the ZSL queue and/or the historical frame queue, the electronic device may perform determining based on a quantity of frames between a manual-exposure frame and the reference frame for the current photographing. If a manual-exposure frame exists and a quantity of frames between the manual-exposure frame and the reference frame for the current photographing is less than or equal to a preset quantity of frames (for example, 7 frames), it is considered that the manual-exposure frame is available for the current photographing. On the contrary, if the quantity of frames is greater than the preset quantity of frames, it is considered that the manual-exposure frame is unavailable for the current photographing. Alternatively, the electronic device may perform determining based on a time interval between a timestamp of a manual-exposure frame and the timestamp of the reference frame for the current photographing.

It should be understood that sequence numbers of the steps in the foregoing embodiments do not mean an execution sequence. An execution sequence of processes should be determined based on functions and internal logic of the processes, and should not be construed as any limitation on implementation processes of embodiments of this application.

A person skilled in the art can clearly understand that, for ease and brevity of description, division into the foregoing functional units or modules is merely used as an example for description. During actual application, the foregoing functions may be allocated to different functional units or modules for implementation according to a requirement. To be specific, an internal structure of the apparatus is divided into different functional units or modules to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For specific operating processes of the units or modules in the foregoing system, refer to corresponding processes in the method embodiments. Details are not described herein again.

When the integrated unit is implemented in the form of the software functional unit and sold or used as an independent product, the integrated unit may be stored in a computer-readable storage medium. Based on such an understanding, in this application, all or some of the processes of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a form of source code, in a form of object code, in a form of an executable file, in some intermediate forms, or the like. The computer-readable medium may include at least the following: any entity or apparatus that can carry computer program code to a photographing apparatus/terminal device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk drive, a magnetic disk, or a compact disc. In some jurisdictions, according to legislation and patent practice, the computer-readable medium cannot be an electrical carrier signal or a telecommunication signal.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

In embodiments provided in this application, it should be understood that the disclosed apparatus, electronic device, and method may be implemented in other manners. For example, the described apparatus/electronic device embodiments are merely examples. For example, division into the modules or units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

The electronic device provided in embodiments of this application may include a memory, a processor, and a computer program stored in the memory and capable of running in the processor. When the processor executes the computer program, the method according to any one of the foregoing method embodiments is implemented.

An embodiment of this application further provides a computer-readable storage medium. The computer-readable storage medium stores a computer program. When the computer program is executed by a processor, the steps in the foregoing method embodiments may be implemented.

An embodiment of this application provides a computer program product. When the computer program product is run on an electronic device, the electronic device is enabled to implement the steps in the foregoing method embodiments when executing the computer program product.

An embodiment of this application further provides a chip system. The chip system includes a processor. The processor is coupled to a memory. The processor executes a computer program stored in the memory, to implement the method in the foregoing method embodiments. The chip system may be a single chip or a chip module including a plurality of chips.

In the foregoing embodiments, descriptions of embodiments have respective focuses. For a part that is not described in detail or recorded in an embodiment, refer to related descriptions in other embodiments. It should be understood that sequence numbers of the steps in the foregoing embodiments do not mean an execution sequence. An execution sequence of processes should be determined based on functions and internal logic of the processes, and should not be construed as any limitation on implementation processes of embodiments of this application. In addition, in the descriptions of this specification of this application and the appended claims, the terms "first", "second", "third", and the like are merely intended for differentiation in descriptions, and shall not be understood as an indication or implication of relative importance or an implicit indication of a quantity of indicated technical features. Therefore, a feature limited by "first", "second", "third", or "fourth" may explicitly or implicitly include one or more features. In addition, it should be understood that, in embodiments of this application, at least one includes one or more, where a plurality of means two or more. In embodiments of this application, "and/or" describes only an association relationship between associated objects, and indicates that three relationships may exist. For example, A and/or B may indicate the following three cases: Only A exists, both A and B exist, and only B exists. In addition, the character "/" in this specification usually indicates an "or" relationship between the associated objects.

Reference to "an embodiment", "some embodiments", or the like described in this specification of this application indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A photographing processing method, applied to an electronic device, wherein the method comprises:
displaying a photographing preview interface;
in response to a first photographing operation on the photographing preview interface, selecting a first photographing frame, and delivering a first manual-exposure parameter to an image sensor, wherein the first photographing frame comprises at least one first image and at least one first manual-exposure frame, an exposure of the first manual-exposure frame is different from an exposure of the first image, the first manual-exposure parameter indicates the image sensor to perform exposure processing based on the first manual-exposure parameter to obtain a second manual-exposure frame, and the second manual-exposure frame is cached in cache space;
generating a first photographing image based on the first photographing frame;
in response to a second photographing operation on the photographing preview interface, selecting a second photographing frame, wherein the second photographing frame comprises at least one second image and at least one second manual-exposure frame selected from the cache space, an exposure of the second manual-exposure frame is different from an exposure of the second image, and the second photographing operation is performed after the first photographing operation; and
generating a second photographing image based on the second photographing frame.

2. The method according to claim 1, wherein before delivering the first manual-exposure parameter to the image sensor, the method further comprises:
determining whether the first manual-exposure frame is available for next photographing; and
if the first manual-exposure frame is unavailable for the next photographing, performing the step of delivering the first manual-exposure parameter to the image sensor; or
if the first manual-exposure frame is available for the next photographing, in response to the second photographing operation, selecting the first manual-exposure frame and the at least one second image as the second photographing frame.

3. The method according to claim 2, wherein determining whether the first manual-exposure frame is available for the next photographing comprises:
predicting time of the next photographing based on photographing time of the first photographing operation and a photographing interval; and
if a time interval between the time of the next photographing or a timestamp of a reference frame for the next photographing and a timestamp of the first manual-exposure frame is greater than a preset time threshold, determining that the first manual-exposure frame is unavailable for the next photographing, wherein the timestamp of the reference frame for the next photographing is determined based on the time of the next photographing; or
if a time interval between the time of the next photographing or a timestamp of a reference frame for the next photographing and a timestamp of the first manual-exposure frame is less than or equal to the preset time threshold, determining that the first manual-exposure frame is available for the next photographing.

4. The method according to claim 1 or 2, wherein the method further comprises:
in response to the second photographing operation, delivering a second manual-exposure parameter to the image sensor, to indicate the image sensor to perform exposure processing based on the second manual-exposure parameter to obtain a third manual-exposure frame, wherein the third manual-exposure frame is cached in the cache space; or
in response to the second photographing operation, if it is determined that the second manual-exposure frame is unavailable for next photographing, delivering a second manual-exposure parameter to the image sensor, to indicate the image sensor to perform exposure processing based on the second manual-exposure parameter to obtain a third manual-exposure frame, wherein the third manual-exposure frame is cached in the cache space.

5. The method according to any one of claims 1 to 4, wherein a part of first images and a part of second images are same images.

6. The method according to claim 5, wherein the method further comprises:
when the photographing preview interface is displayed, caching, in the cache space, an image that is captured by the image sensor and that corresponds to the photographing preview interface, wherein
the first image is an image cached in the cache space before the first photographing operation, and the first manual-exposure frame is an image cached in the cache space before the first photographing operation or the second photographing operation; and
the second image is an image cached in the cache space before the second photographing operation.

7. The method according to claim 6, wherein the cache space is a zero shutter lag image cache queue.

8. The method according to claim 6 or 7, wherein
the first photographing frame comprises a cached image in the cache space, or comprises a cached image in the cache space and a historical cached image, wherein the historical cached image is an image that is cached in the cache space before the first photographing operation but is not cached in the cache space and is persistently stored in a storage medium during the first photographing operation; and
the second image is a cached image in the cache space, or an image that is cached in the cache space before the second photographing operation but is not cached in the cache space and is persistently stored in the storage medium during the second photographing operation.

9. The method according to claim 8, wherein selecting the first photographing frame comprises:
if a target cached image exists in the cache space or first target information exists in historical frame storage space, selecting the target cached image or an image corresponding to the first target information as the first manual-exposure frame, wherein the historical frame storage space is used to store information about a photographing frame selected for historical photographing, the photographing frame selected for the historical photographing is persistently stored in the storage medium, and the target cached image and the image corresponding to the first target information are manual-exposure frames available for current photographing;
selecting the at least one first image from the historical frame storage space and/or the cache space; and
for an image selected from the cache space, deleting the selected image from the cache space, persistently storing the selected image in the storage medium, and storing information about the selected image in the historical storage space, wherein the selected image comprises the first manual-exposure frame and/or the first image.

10. The method according to claim 9, wherein the method further comprises:
if the target cached image does not exist in the cache space and the first target information does not exist in the historical frame storage space, delivering a fourth manual-exposure parameter to the image sensor, to indicate the image sensor to perform exposure processing based on the fourth manual-exposure parameter to obtain a manual-exposure frame, and selecting the manual-exposure frame as the first manual-exposure frame.

11. The method according to claim 9, wherein a quantity of frames between the manual-exposure frame available for the current photographing and a reference frame for the first photographing operation is less than a preset quantity, or a time interval between a timestamp of the manual-exposure frame available for the current photographing and a timestamp of a reference frame for the first photographing operation is less than a preset threshold.

12. The method according to claim 9, wherein selecting the second photographing frame comprises:
selecting the second manual-exposure frame from the cache space, deleting the second manual-exposure frame from the cache space, persistently storing the second manual-exposure frame in the storage medium, and storing information about the second manual-exposure frame in the historical storage space; and
selecting the second image from the cache space, deleting the second image from the cache space, persistently storing the second image in the storage medium, and storing information about the second image in the historical storage space; and/or selecting second target information from the historical storage space, wherein an image corresponding to the second target information is the second image.

13. The method according to claim 8, wherein selecting the first photographing frame comprises:
if a target cached image exists in the cache space, selecting the target cached image as the first manual-exposure frame, wherein the target cached image is a manual-exposure frame available for current photographing;
selecting the at least one first image from the cache space; and
keeping the first manual-exposure frame and the first image cached in the cache space, and waiting for the first manual-exposure frame and the first image to be removed by a storage mechanism of the cache space; and
selecting the second photographing frame comprises:
selecting the second manual-exposure frame and the second image from the cache space, keeping the second manual-exposure frame and the second image cached in the cache space, and waiting for the second manual-exposure frame and the second image to be removed by the storage mechanism of the cache space.

14. The method according to claim 1, wherein generating the first photographing image based on the first photographing frame comprises:
if an operation of viewing a thumbnail is detected, or a camera application is running in the background or closed, or the camera application is running in the background or closed and a preset trigger condition is detected, obtaining the first photographing frame from a storage medium, and performing photographing algorithm processing on the first photographing frame to obtain the first photographing image; and
generating the second photographing image based on the second photographing frame comprises:
if an operation of viewing a thumbnail is detected, or the camera application is running in the background or closed, or the camera application is running in the background or closed and a preset trigger condition is detected, obtaining the second photographing frame from the storage medium, and performing photographing algorithm processing on the second photographing frame to obtain the second photographing image.

15. The method according to claim 14, wherein the preset trigger condition comprises at least one of the following: an operation of starting an image access application, an operation of viewing an image, an operation of sharing an image, an operation of editing an image, a system being in an idle state, a screen being off, a running memory being higher than a first threshold, device temperature being lower than a first temperature threshold, or processor load being lower than a second threshold.

16. An electronic device, comprising a memory, a processor, and a computer program stored in the memory and capable of running in the processor, wherein when the processor executes the computer program, the method according to any one of claims 1 to 15 is implemented.

17. A computer-readable storage medium, wherein the computer-readable storage medium stores a computer program, and when the computer program is executed by a processor, the method according to any one of claims 1 to 15 is implemented.
